# EUROPEAN PATENT APPLICATION

(11) **EP 2 383 736 A1**
(43) Date of publication of application: **02.11.2011**
(21) Application number: 11171050.5
(22) Date of filing: 04.06.2008
(51) Int. Cl.: G11B 20/00, H04H 60/14

(54) **Limitating the number of copies by recording content with the indication copy-no-more as soon as the recording media is removable**

(30) Priority: 06.06.2007 JP 2007149885; 06.06.2007 JP 2007149886; 06.06.2007 JP 2007149887; 06.06.2007 JP 2007149888; 21.08.2007 JP 2007214251; 21.08.2007 JP 2007214252
(62) Divisional of application: 08251934.9
(71) Applicant: Hitachi Ltd., Tokyo (JP)
(72) Inventor: KANEMARU, Takashi, Tokyo, 100-8220 (JP); TSURUGA, Sadao, Tokyo, 100-8220 (JP); OKAMOTO, Hiroo, Tokyo, 100-8220 (JP)
(74) Representative: Calderbank, Thomas Roger

(57) **Abstract**

The invention provides a control method in a receiver (3) which receives digital contents and copy control information of the digital contents, including the steps of: when the received copy control information has copy generation information indicating Copy-One-Generation (SA01), recording the digital contents on a recording medium while setting the digital contents in a copy-prohibited state (SA04) in the case where the recording medium is a removable recording medium (SA02) ; recording the digital contents on a recording medium while setting the digital contents in a copy-prohibited state (SA04) when the received copy control information indicates prohibition of a plurality of copies (SA03) in the case where the recording medium is an internal recording medium which records digital contents while locally encrypting the digital contents (SA02) ; and recording the digital contents on a recording medium while setting the digital contents in a copiable state up to a predetermined copiable number (SA05) when the received copy control information indicates permission of a plurality of copies (SA03) in the case where the recording medium is an internal recording medium which records digital contents while locally encrypting the digital contents (SA02). Thus, user friendliness is improved while copy control is performed in the case where a digital broadcasting program marked as Copy Generation is recorded.

## Description

The technical field relates to copy control of contents.

With regard to the aforementioned technical field, JP-A-2002-319227 had as its object "improvement in user friendliness when information marked as Copy-One-Generation is rewritten to information marked as Copy-No-More and recorded", and described as a solution "Copy-One-Generation is permitted within a predetermined time after recording, in order to make up part of the recording interrupted due to occurrence of a fault etc. at the time of recording. In addition, two pieces of one and the same stream are recorded on a medium so that one piece of the stream is used for ordinary viewing while the other piece of the stream is moved to another medium and stored therein in accordance with necessity".

In addition, in the aforementioned technical field, JP-A-2006-114090 had as its object "the provision of a device and method which can limit recording on a recording medium in an apparatus for recording and reproducing digital information to which copyright protection should be given" and described as a solution "a recording and reproducing control circuit is configured so that when copy control information indicates Copy One Generation, the recording and reproducing control circuit records converted digital information obtained by converting information at a predetermined bit rate and the copiable number information together with information on the recording medium and follows the copy control information, and that when the digital information or the converted digital information is moved to a recording medium of a recording device connected to the reproducing device though the copy control information indicates Copy No More, the recording and reproducing control circuit disables the digital information signal or the converted digital information from being reproduced while reducing the copiable number to update the copiable number information and record the digital information signal or the converted digital information, the copy control information and the copiable number information on the recording medium again".

In recent years, as digital broadcasting has become popular, various recording media have become available on the market and modes for viewing digital contents have been also diversified. For example, as service of digital broadcasts has expanded, recording devices which can record the digital broadcasts have been popular. In such an environment, it can be conceived from the viewpoint of copyright protection that transmission and reception of data among a plurality of recording and reproducing devices or among recording media is controlled by use of copy control information.

In digital broadcast recording, a received digital broadcast is recorded on an HDD (Hard Disk Drive) built in a recording device. When the program of the digital broadcast is "Copy Free", the program of the digital broadcast is allowed to be copied to another recording medium (e.g. an optical disc, a semiconductor memory, or another HDD) from the HDD. When the program of the digital broadcast is "Copy One Generation" (which means that copy of copy (two or more generations) of the program is prohibited), the program of the digital broadcast is allowed to be moved to another recording medium (e.g. an optical disc, a semiconductor memory, or another HDD) from the HDD.

In the recording device according to JP-A-2002-319227, the program of the digital broadcast is allowed to be copied within the predetermined time even in the case where the program of the digital broadcast is "Copy One Generation". Thus, the program of the digital broadcast can be made up when the recording was interrupted.

In the recording device according to JP-A-2002-319227, copy is however not allowed in the same manner as usual when the predetermined time or longer has elapsed. In the case where, for example, the recording device which cannot simultaneously record a program onto the HDD and copy the program from the HDD to an optical disc is busy with recording of a program and concentrating on access to the HDD, it is conceived that the predetermined time would lapse before copying of the program to the optical disc from the HDD has been completed.

Moreover, it is likely that control based on the copy control information would lower user-friendliness because judging whether or not copying is allowed between arbitrary devices is complicated. In the digital information recording and reproducing method disclosed in JP-A-2006-114090, the copiable number in digital information in which the copy control information indicates Copy One Generation is managed and the information of the copiable number is displayed to the user to thereby improve user-friendliness.

However, in the digital information recording and reproducing device disclosed in JP-A-2006-114090, it cannot be said that adaptability to removable recording media, especially user-friendliness is sufficient. The occasion where pieces of digital data different in copy control information and/or copiable number are stored in a recording medium as a result of repetitively recording and copying digital information has not been presumed so that a control method for this occasion has not been described. On this occasion, in the case where, for example, there are pieces of digital data with the same contents, it is likely that such a problem that one piece of the digital data allowed to be copied has been deleted while another piece of the digital data not allowed to be copied any more still remains may occur.

Therefore, in order to solve some of the aforementioned problems, the invention is to provide a device or method which improves user friendliness while performing copy control in the case where a digital broadcasting program marked as Copy One Generation is recorded.

Specifically, for example, there is provided a control method in a receiver which receives digital contents and copy control information of the digital contents, including the steps of: when the received copy control information has copy generation information indicating Copy-One-Generation, recording the digital contents on a recording medium while setting the digital contents in a copy-prohibited state in the case where the recording medium is a removable recording medium; recording the digital contents in a recording medium while setting the digital contents in a copy-prohibited state when the received copy control information indicates prohibition of a plurality of copies in the case where the recording medium is an internal recording medium which records digital contents while locally encrypting the digital contents; and recording the digital contents in a recording medium while setting the digital contents in a copiable state up to a predetermined copiable number when the received copy control information indicates permission of a plurality of copies in the case where the recording medium is an internal recording medium which records digital contents while locally encrypting the digital contents.

In addition, for example, there is provided a control method in a receiver which receives digital contents and copy control information of the digital contents, including the steps of: when the received copy control information has copy generation information indicating Copy-One-Generation, recording the digital contents on a recording medium while setting the digital contents in a copy-prohibited state in the case where the recording medium does not support copy number limitation management; recording the digital contents in a recording medium while setting the digital contents in a copy-prohibited state when the received copy control information indicates prohibition of a plurality of copies in the case where the recording medium supports copy number limitation management; and recording the digital contents in a recording medium while setting the digital contents in a copiable state up to a predetermined copiable number when the received copy control information indicates permission of a plurality of copies in the case where the recording medium supports copy number limitation management.

In addition, for example, there is provided a copy control method in a receiver which receives digital contents and a plurality of kinds of copy control information for controlling copy of the digital contents and records the digital contents in one of recording media in accordance with the kinds of copy control information, including the steps of: when first information in the received copy control information is copy generation information indicating Copy-One-Generation, permitting recording of the digital contents while setting the digital contents in a copiable state up to a limited copiable number in the case where second information in the received copy control information indicates Copy-A-Limited-Number; and permitting recording of the digital contents only once while setting the digital contents in a copy-prohibited state in the case where second information in the received copy control information does not indicate Copy-A-Limited-Number.

Therefore, for example, there is provided a recording and reproducing device including: a reception portion which receives digital information containing copy control information containing copy generation management information and copiable number information; a mounting portion in which a plurality of removable recording media can be mounted; a recording and reproducing portion which records/reproduces digital data on/from a recording medium mounted in the mounting portion in compliance with a predetermined rule; a copy control information processing portion which updates the copy control information; and a control portion which controls the copy control information processing portion to update not the copy generation management information but the copiable number information in accordance with the digital data and performs control to move the digital data when the data are moved from a first recording medium to a second recording medium which is removable but different from the first recording medium.

In addition, for example, there is provided another recording and reproducing device including: a recording and reproducing portion which performs, on a recording medium, writing of digital information containing copy control information containing copy generation management information and copiable number information and reading of data; and a control portion which performs control so that when the copy generation management information is information indicating Copy-One-Generation, the copiable number information is recorded together with the digital information on the recording medium, and that when a list of the digital information recorded on the recording medium is displayed, the digital information is classified and displayed in accordance with the copy control information.

When, for example, pieces of digital information different in the copy generation management information and the copiable number information but equivalent in contents are stored in a first recording medium and a piece of digital information with the copiable number of not less than 2 is copied from the first recording medium to a second recording medium which is different from the first recording medium, notice of the presence of digital information equivalent in contents in the first recording medium is given to a user.

According to the means, user friendliness can be improved while copy control is performed on contents.

Incidentally, problems other than the aforementioned problems, means for solving the problems, and effects will be shown also in the following embodiment.

In the drawings:

### ; DRAWINGS

Fig. 1 shows an example of configuration of a system;
Fig. 2 shows an example of configuration of a transmitter;
Fig. 3 shows an example of a structure of a content availability descriptor as one constituent part of copy control information;
Fig. 4 shows an example of description for each field of the content availability descriptor;
Fig. 5 shows an example of a structure of a digital copy control descriptor as one constituent part of the copy control information;
Fig. 6 shows an example of copy control information;
Fig. 7 shows an example of reception processing in the receiver 3 for each field of a content availability descriptor sent out from the transmitter;
Fig. 8 shows an example of operation of the transmitter on protection of program contents using copy control information;
Fig. 9 shows a control example in which the receiver retains (records) program contents by use of copy control information;
Fig. 10 shows an example of configuration of the receiver;
Fig. 11 shows an example of a transport packet added with a time stamp;
Fig. 12 shows an example in which program contents have been recorded on a recording medium;
Fig. 13 shows a processing example for generating copy information and copy number of management information in the case where program contents marked as Copy One Generation are recorded;
Fig. 14 shows a processing example for copying program contents;
Fig. 15 shows a processing example for moving program contents;
Fig. 16 shows a data configuration example of a recording medium which can manage a plurality of copies;
Fig. 17 shows a processing example for generating copy information and copy number of management information in the case where program contents marked as Copy One Generation are recorded;
Fig. 18 shows a connection example between the receiver and external devices;
Fig. 19 shows an example of configuration of a reception recording and reproducing portion;
Fig. 20 shows an example of configuration of a recording and reproducing control portion;
Fig. 21 shows a table example for managing copy control information;
Fig. 22 shows an example of a display screen;
Fig. 23 shows a processing example of copy control;
Fig. 24 shows a display example of a message;
Fig. 25 shows a display example of a message;
Fig. 26 shows a processing example of copy reservation information recording;
Fig. 27 shows a display example of a message;
Fig. 28 shows a processing example of copy control;
Fig. 29 shows another example of the configuration of the reception recording and reproducing portion;
Fig. 30 shows a configuration example of information of a removable recording medium;
Fig. 31 shows an example of a display screen;
   and
Fig. 32 shows another example of the configuration of the reception recording and reproducing portion.

A preferable example of a mode (embodiment) for carrying out the invention will be described below. Incidentally, the invention is not limited to the embodiment. This embodiment chiefly relates to handling of information marked as Copy-One-Generation.

### <System>

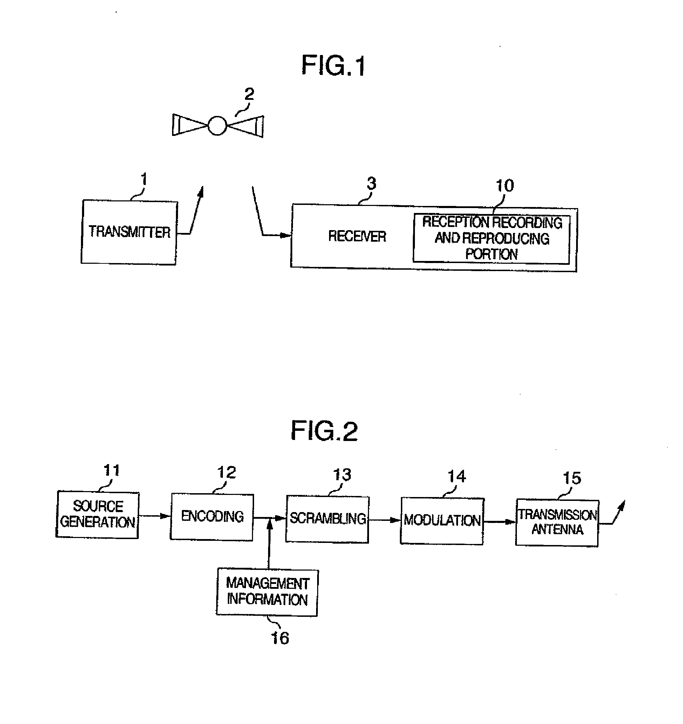

Fig. 1 is a block diagram showing an example of configuration of a system according to this embodiment. The case where information transmitted or received by broadcasting is recorded or reproduced is illustrated in Fig. 1. Incidentally, it need not be limited to broadcasting but may be VOD using communication. It will be generically referred to as distribution.

The reference numeral 1 designates a transmitter installed in an information providing station such as a broadcasting station; 2, a relay device installed in a relay station, a broadcasting satellite, etc.; 3, a receiver installed in a user's house, etc.; and 10, a reception recording and reproducing portion built in the receiver 3. The reception recording and reproducing portion 10 can record or reproduce broadcast information.

The transmitter 1 transmits a modulated signal wave through the relay device 2. For example, it is also possible to use transmission by cable, transmission by telephone line, transmission by digital terrestrial broadcasting, etc. As will be described later, this signal wave received by the receiver 3 is demodulated into an information signal and then recorded as a signal suitable for recording if necessary. When a display is built in the receiver 3, the user can view video and audio expressed by the information signal on the display. When there is no display built in the receiver 3, the user can view the video and audio on a display which is not shown but connected to the receiver 3.

### <Transmitter>

Fig. 2 is a block diagram showing an example of configuration of the transmitter 1 in the system of Fig. 1.

The reference numeral 11 designates a source generating portion; 12, an encoding portion for performing compression in an MPEG system, etc.; 13, a scrambling portion; 14, a modulation portion; 15, a transmission antenna; and 16, a management information granting portion. The data amount of information of video, audio etc. generated by the source generating portion 11 made up of a camera, a recording and reproducing device, etc. is compressed by the encoding portion 12 so that the information can be transmitted in a narrower occupied bandwidth. The information is encrypted for transmission by the scrambling portion 13 in accordance with necessity so that the information can be viewed only by a specific viewer. After the information is modulated into a signal suitable for transmission by the modulation portion 14, the modulated signal is transmitted as a radio wave toward the relay device 2 from the transmission antenna 15. On this occasion, copy control information which is information for controlling copy, and information about the current time, etc. are added by the management information granting portion 16.

Incidentally, in most cases, pieces of information are multiplexed in one radio wave by a method such as time division or spectral dispersion. In this case, a plurality of systems each having the source generating portion 11 and the encoding portion 12 are provided and a multiplexing portion for multiplexing the pieces of information is disposed between the encoding portion 12 and the scrambling portion 13, though description about this is not given in Fig. 2 for the sake of simplification.

### <Copy Control Information>

The copy control information is information for controlling constraints such as copy permission, the copiable number, etc. For example, the copy control information is added by the management information granting portion 16. The copy control information contains a content availability descriptor, a digital copy control descriptor, etc.

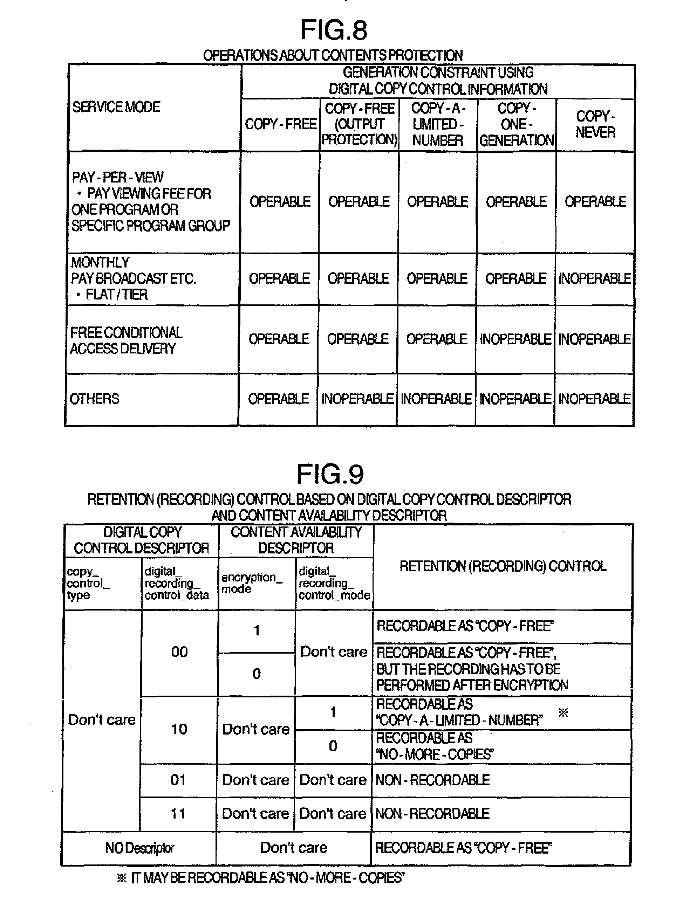

Fig. 8 shows an example of operation concerning program content protection using the copy control information.

"Operable" means a generation constraint based on digital copy control information which a transmitter side can select for a content in accordance with each service mode. For example, "pay-per-view" shows that any digital copy control information may be used. On the other hand, "monthly pay broadcasting etc." shows that the transmitter side cannot select "copy-never".

"Flat/tier" is referred to as flat contract when a plurality of channels for pay broadcasting etc. are collectively contracted, and as tier contract when contract is made in accordance with each channel.

For example, "others" include "the case of a program which is not a pay broadcast and does not have any content protection".

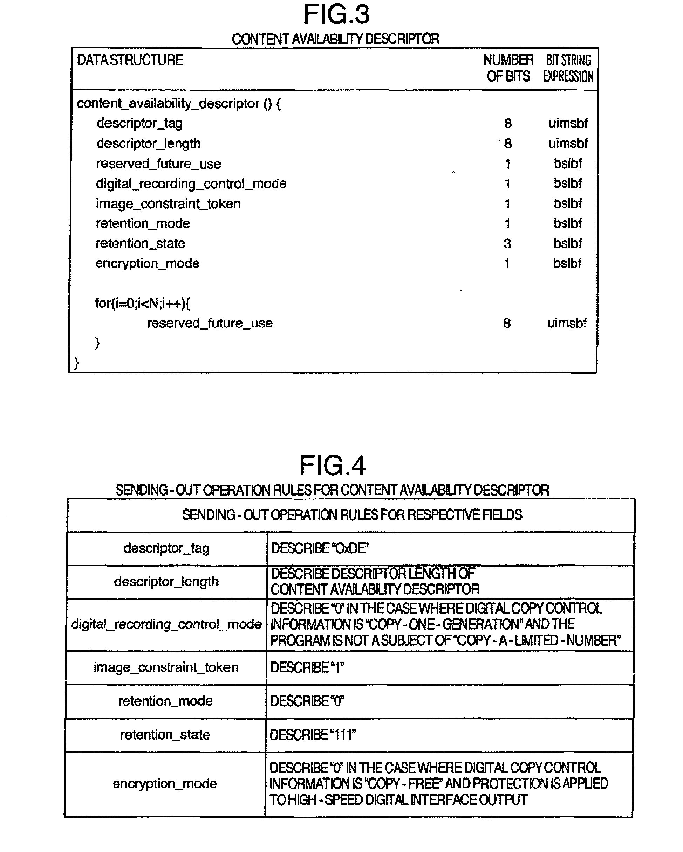

Fig. 3 shows an example of a structure of a contents availability descriptor as one constituent part of the copy control information. The contents availability descriptor is information which is, for example, sent out after generated and added by the management information granting portion 16 and stored in PSI (Program Specific Information) (such as PMT (Program Map Table)) or SI (Service Information) (such as EIT (Event Information Table) or SDT (Service Description Table)) of MPEG-TS.

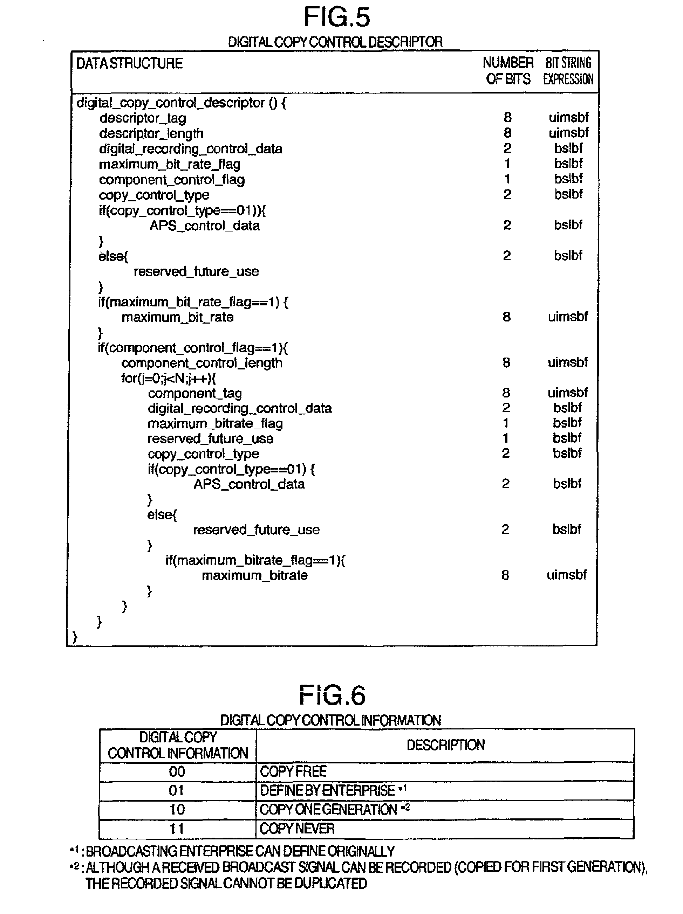

The content availability descriptor is used to be placed (sent out) for the program in the case where control information about retention (recording) or output is described. It has the following meaning. That is, when a one-bit field of a digital_recording_control_mode (digital copy mode bit) is "1", the program can be recorded as "copy-a-limited-number", although digital_recording_control_data of a digital copy control descriptor described in Fig. 5 indicates "copy-one-generation". When the one-bit field of the digital_recording_control_mode is "0", the program cannot be recorded as "copy-a-limited-number".

Incidentally, the content availability descriptor is always placed (sent out) when the program is a subject of output protection. This output protection means that protection is applied to high-speed digital interface output of "copy-free" contents by use of an output protection bit (encryption_mode) of the content availability descriptor. In other words, although encryption is performed at the time of output via the digital interface or copy to a recording medium, there is no constraint imposed on the copy number or generation. Re-transmission over the Internet becomes impossible practically. This output protection is also referred to as EPN (encryption plus non-assertion).

The content availability descriptor is also always placed (sent out) in the case where the digital copy control information of the program is "copy-one-generation" but the program is not a subject of "copy-a-limited-number".

Fig. 4 is an example of descriptive contents in each field of the content available descriptor.

"OxDE" meaning a content availability descriptor is described in "descriptor_tag". A descriptor length of the content availability descriptor is described in "descriptor_length". When digital copy control information indicates "copy-one-generation" but the program is not a subject of "copy-a-limited-number", "0" is described in "digital_recording_control_mode". When the digital copy control information indicates "copy-one-generation" and the program is a subject of "copy-a-limited-number", "1" is described in
"digital_recording_control_mode".

When the digital copy control information is "copy-free" and protection is applied to high-speed digital interface output, "0" is described in "encryption_mode".

"Retention_mode" means a temporary retention control bit. "0" described in "retention_mode" indicates that temporary retention is permitted even though "digital_recording_control_data" (digital copy control information) of the digital copy control descriptor is "copy-never". "Retention_state" means a maximum permissible temporary retention time. "111" described in "retention_state" indicates that retention for 1 hour 30 min is permitted. Incidentally, the default statuses of "image_constraint_token", "retention_state" and "encryption_mode" are "1". The total copy number for contents marked as "Copy-A-Limited-Number" is limited to 10, inclusive of both a copy source and a copy destination. In addition, in the case where there are a recording function for recording onto a removable recording medium and a move function via high-speed interface output, limitation is performed inclusively of these functions. Specifically, for example, contents of the copy source and the copy destination except analog video and audio output and digital audio output are limited in copy number or prohibited from being copied (No-More-Copies) respectively. If it is within the limitation, contents of the copy source or the copy destination may be moved. Incidentally, information such as a thumbnail used only for the purpose of contents management is regarded as information excluded from copy.

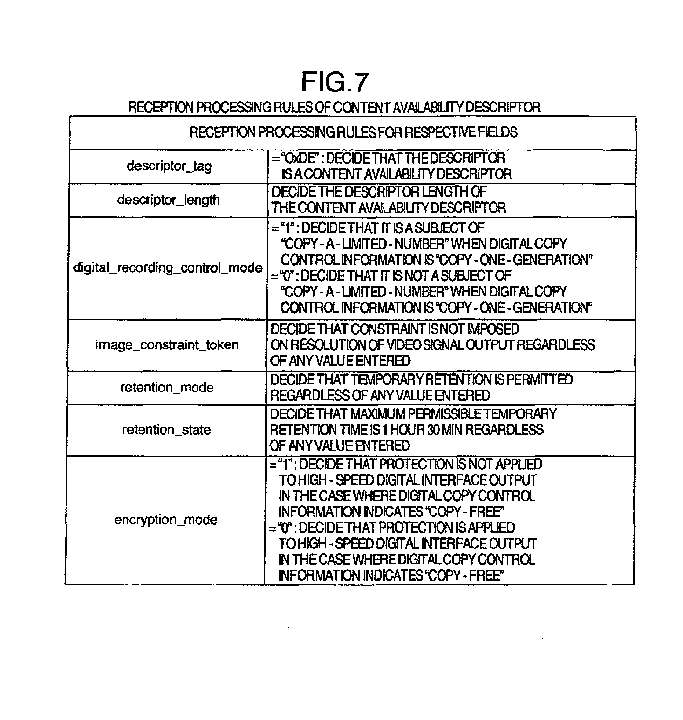

Processing for each field is performed by the receiver side, as will be described later in Fig. 7.

Fig. 5 shows an example of a structure of a digital copy control descriptor as one constituent part of the copy control information. The digital copy control descriptor is information which is, for example, sent out after generated and added by the management information granting portion 16 and stored in PSI (such as PMT) or SI (such as EIT or SDT) of MPEG-TS.

The digital copy control descriptor uses a 2-bit field of the "digital_recording_control_data" (digital copy control information) to express copy generation control information.

Fig. 6 shows an example of digital copy control information. When the digital copy control information is "00", "01", "10" and "11", the digital copy control information expresses copy-free, define-by-broadcasting-enterprise, copy-one-generation, and copy-never, respectively. Incidentally, copy-one-generation means that a received broadcasting signal is permitted to be recorded (permitted for first generation copy) but is not permitted to be duplicated (copied) after the recording.

The content availability descriptor in Figs. 3 and 4 is also referred to as copy number limitation information. The digital copy control information in Figs. 5 and 6 is also referred to as copy generation limitation information.

### <Receiver>

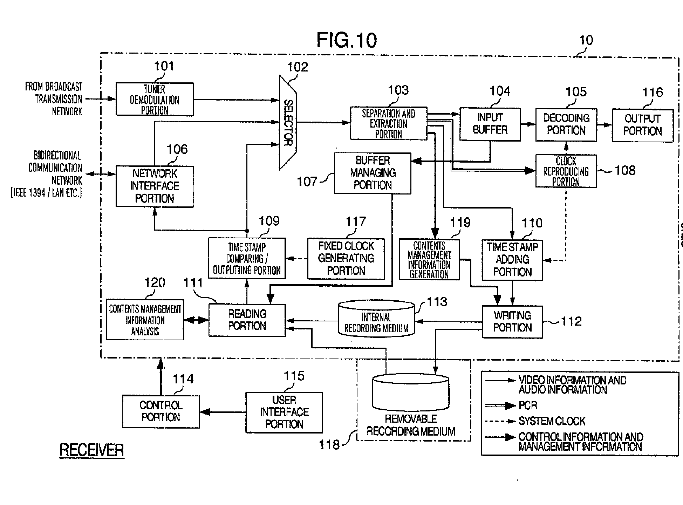

Fig. 10 is a block diagram showing an example of configuration of the receiver 3 in the system of Fig. 1. In Fig. 10, places where lines expressing flows of information, PCR etc. intersect each other are regarded as having no contact between the lines. A portion with a black circle indicates a contact between lines and one of the lines branches from the other line in this portion.

The receiver 3 is a receiver which receives a digital broadcast or an IP (Internet Protocol) broadcast via a network and records/reproduces the broadcast. Description will be made in the case where the receiver 3 handles a signal encoded by an MPEG (Moving Picture Experts Group) system as an image compression technique and multiplexed by an MPEG2-TS system.

The receiver 3 includes a reception recording and reproducing portion 10, a control portion 114 (e.g. CPU (Central Processing Unit)), and a user interface portion 115 (e.g. a keyboard, a mouse, a remote controller, etc. as input devices).

In this configuration example, the respective constituent parts are described as hardware elements. However, some of the constituent parts may be implemented by software. This configuration example may be applied to transmission/reception of video contents, audio contents, etc. to/from a specific user, such as VOD (Video On Demand) etc. via a network. These are generically referred to as distribution.

The control portion 114 is connected to respective portions (including the reception recording and reproducing portion 10) of the receiver by a bus portion, and controls operation of the receiver as a whole. The control portion 114 receives various command signals from a user through the remote controller etc. of the user interface portion 115 and controls the respective portions connected through the bus portion based on the command signals so as to execute various processes.

The reception recording and reproducing portion 10 includes a tuner demodulation portion 101, a selector 102, a separation and extraction portion 103 (e.g. a demultiplexer), an input buffer 104, a decoding portion 105 (e.g. an MPEG decoder), a network interface portion 106, a buffer managing portion 107, a clock reproducing portion 108, a time stamp comparing/outputting portion 109, a time stamp adding portion 110, a reading portion 111, a writing portion 112, an internal recording medium 113, an output portion 116, a fixed clock generating portion 117 (e.g. a crystal oscillator), a contents management information generating portion 119, and a contents management information analyzing portion 120.

Each of the internal recording medium 113 (also referred to as first recording medium) and a removable recording medium 118 (also referred to as second recording medium) is a randomly accessible medium such as a hard disk drive (HDD), a semiconductor memory, a magnetic disk, an optical disc, or a photomagnetic disc.

The output portion 116 includes a display portion using a CRT (Cathode Ray Tube), a LCD (Liquid Crystal Display), a PDP (Plasma Display Panel) etc.; an audio output portion using speakers etc.; an HDMI (High Definition Multimedia Interface) output terminal for outputting analog or digital video/audio data to another display device etc.; and the like. The output portion 116 reproduces decoded video/audio on the display portion/audio output portion which are output devices, or outputs video/audio contents data etc. to another display device etc. through the output terminal (e.g. HDMI) etc.

The tuner demodulation portion 101 receives a digital broadcasting signal transmitted from the transmitter 1 through a wireless (satellite, terrestrial) or wired broadcast distribution network etc. The tuner demodulation portion 101 performs a selection and detection process for a physical or virtual channel frequency designated through a user operating portion of the remote controller etc. of the user interface portion 115 and the control portion 114. The tuner demodulation portion 101 outputs an MPEG2-TS (transport stream) to the selector 102 after the MPEG2-TS has been subjected to a digital demodulation and error correction process.

The selector 102 performs a 3-input 1-output selection process in accordance with control from the control portion 114, and outputs the output to the separation and extraction portion 103.

The separation and extraction portion 103 separates and extracts transport packets of a channel (program) designated through the user operating portion of the remote controller etc. of the user interface portion 115 and the control portion 114, from the inputted MPEG2-TS, and outputs the separated and extracted transport packets to the time stamp adding portion 110. In addition, the separation and extraction portion 103 separates and extracts PESs (Packetized Elementary Stream) or ESs (Elementary Stream) of video and audio from the transport packets of the channel (program) designated through the user operating portion of the remote controller etc. of the user interface portion 115 and the control portion 14, and outputs the PESs or ESs of video and audio to the input buffer 104.

The ES means each of compressed/encoded video and audio data. The PES means a packetized stream obtained by dividing the video or audio ES into packets with a proper size. The separation and extraction portion 103 extracts a PCR (Program Clock Reference) from each of the transport packets of the channel (program) designated through the user operating portion of the remote controller etc. of the user interface portion 115 and the control portion 114, and outputs the extracted PCR to the clock reproducing portion 108.

The separation and extraction portion 103 detects information which is recorded in the internal recording medium 113 or the removable recording medium 118 and which indicates the title of the channel (program), date and time of the start/end of the program, copy generation control information and permission/prohibition of copies, from the transport packets of the channel (program) designated through the user operating portion of the remote controller etc. of the user interface portion 115 and the control portion 114, further generates a data encryption key, and outputs the generated data encryption key to the contents management information generating portion 119. The title, the date and time of the start/end of the program, the copy generation control information and the information indicating permission/prohibition of copies are, for example, stored in PSI or SI information of the MPEG-TS and sent out from the transmitter 1.

The input buffer 104 temporarily stores the PES or ES of video/audio received from the separation and extraction portion 103. The decoding portion 105 compares a DTS (Decoding Time Stamp)/ PTS (Presentation Time Stamp) corresponding to the PES or ES stored in the input buffer 104 with an STC (System Time Clock) count value from the clock reproducing portion 108 to thereby take a decoding and display timing, so that the decoding portion 105 extracts and decodes the PES or ES of video/audio stored in the input buffer 104. The decoded video/audio is outputted to the output portion 116.

The buffer managing portion 107 monitors a volume of transport packets retained in the input buffer 104 but unprocessed by the decoding portion 105, and controls reading start and stop of the reading portion 111 in accordance with the volume.

The clock reproducing portion 108 uses the PCR to reproduce a system clock of the receiver having a consistent frequency, for example, with a system clock of a not-shown code multiplexing portion on the transmitter 1 side. The reproduced system clock is outputted to an STC counter inside the clock reproducing portion 108, the time stamp adding portion 110, etc. An STC count value of the STC counter operating in accordance with the reproduced system clock is outputted to the decoding portion 105.

The time stamp adding portion 110 generates a time stamp in accordance with the system clock reproduced by the clock reproducing portion 108 or a counter operating based on a crystal oscillator not shown, adds the time stamp to each transport packet separated and extracted by the separation and extraction portion 103, and outputs the transport packet added with the time stamp to the writing portion 112.

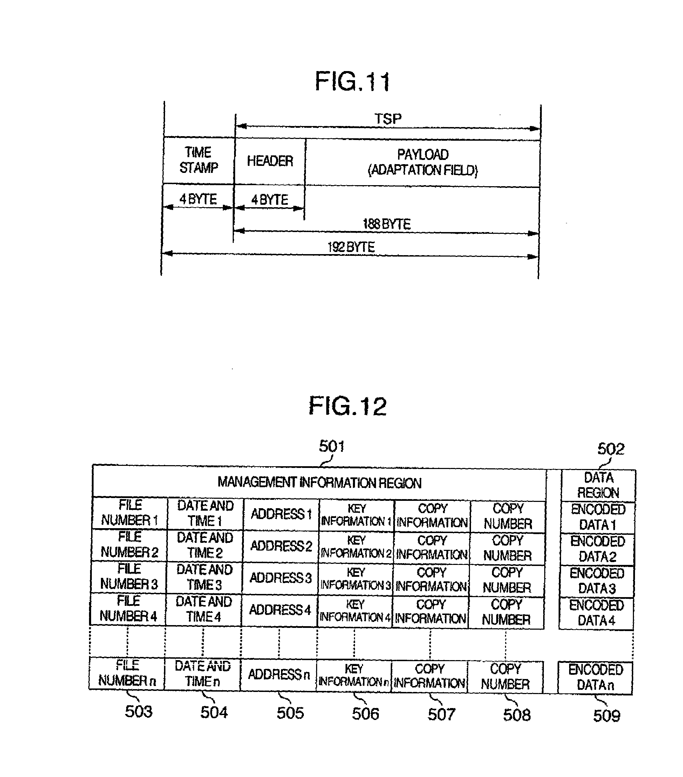

Fig. 11 shows a structure example of a transport packet added with a time stamp. The transport packet (TSP) having a length of 188 byte in an MPEG format is added with a 4-bit time stamp (e.g. at a time instant when the receiver has received the transport packet) in the head so that the packet length becomes 192 byte. Time stamp information about the arrival time of the transport packet is held in the time stamp. The TS in the MPEG format is consisting of a 4-bit header and a 184-bit payload (adaptation field) following the 4-bit header.

The contents management information generating portion (contents information generating portion) 119 generates management information based on the title, the date and time of the start/end of the program, the copy generation control information and the copy number control information (indicating permission/prohibition of copies) and the key information from the separation and extraction portion 103, and outputs the generated management information to the writing portion 112. Alternatively, a content availability descriptor and a digital copy control descriptor which are received from the transmitter 1 and which are shown in Figs. 3 to 6 may be used directly as the management information, or the copy generation control information and the copy number control information may be generated as new information based on the content availability descriptor and the digital copy control descriptor.

The writing portion 112 performs a process of recording, onto the internal recording medium 113 or the removable recording medium 118, the management information generated by the contents management information generating portion 119 and encoded data generated by applying an encoding process to the transport packet added with the time stamp by the time stamp adding portion 110 based on the key information in the management information. As a result, one stream having encoded data generated by applying an encoding process to transport packets added with time stamps contained in video/audio data of one channel (in other words, contents of one certain program, downloaded contents) is stored, in the internal recording medium 113 or the removable recording medium 118, as one data file or two or more fragmentary data files into which the data file is divided.

Incidentally, it can be also said that the time stamp is temporal information relevant to a temporal position of a transport packet added with the stamp. For example, it can be also said that the time stamp is a time instant when a transport packet from the separation and extraction portion 103 is inputted to the time stamp adding portion 110, or a time difference from a reference transport packet (such as the preceding or top transport packet). This time stamp is different from a time stamp (e.g. PCR or DTS or PTS) contained in advance in a transport packet, as described previously.

Fig. 12 shows an example in which program contents have been recorded in the internal recording medium 113 or the removable recording medium 118.

Management information expressing details of program contents and data (video, audio, etc.) which are the substance of the program contents are recorded respectively in a management information region 501 and a data region 502 in accordance with each program contents. For example, file number 503 expressing the title of the program contents, date and time 504 expressing date and time of the start/end of the program, head address and recording size 505 of the data region, copy information 507, copy number 508, key information 506, etc. are recorded in the management information. Program contents are written in the data region 502 from a corresponding address in the head address 505 recorded in the management information region 501. Whenever new program contents are recorded, file number 1, file number 2,... file number n, and management information and the program contents are recorded sequentially.

The copy information 507 is copy generation control information contained in the management information generated by the contents management information generating portion 119. For example, the copy information 507 can be considered to make the following designation by the following 2-bit signal:
00 = Copy Free
10 = Copy One Generation
11 = Copy Never

In this case, with regard to program contents recorded as "Copy One Generation" in the receiver 3, 01 is defined as No More Copies for program contents which are recorded as Copy One Generation but have been copied once to be prohibited from being copied any more. The way to make designation may be an operation the same as the digital copy control information shown in Fig. 6 or may be an operation originally made by the receiver 3.

The copy number 508 is copy number control information contained in the management information generated by the contents management information generating portion 119. The copy number 508 is information generated by the contents management information generating portion 119 based on the copy generation control information and the information expressing permission/prohibition of copies received from the separation and extraction portion 103. In the case where the copy generation control information is "Copy One Generation" and the information expressing permission/prohibition of copies is "Permission", program contents are recorded as "No More Copies", and copiable number information indicating copy permission is stored, e.g. "9" expressing permission of 9 copies is inputted, in the same or different format in the same or different recording medium. This numerical value need be complied with a standard etc. On the other hand, in the case where the copy generation control information is "Copy One Generation" and the information expressing permission/prohibition of copies is "Prohibition", program contents are recorded as "No More Copies", and "0" (indicating the meaning that copy is prohibited) is inputted as the copiable number information indicating copy prohibition.

Incidentally, data which are the substance of program contents recorded as "No More Copies" after rewritten from program contents marked as "Copy One Generation", that is, copy generation control information and information expressing permission/prohibition of copies which are stored in PSI or SI of MPEG-TS and sent out from the transmitter 1 remain unchanged.

For example, the copy information 507, the copy number 508 and the key information 506 are encoded so as not to be altered maliciously.

Returning to description of Fig. 10, the contents management information analyzing portion 120 reads management information stored in the internal recording medium 113 or the removable recording medium 118 through the reading portion 111, and analyzes contents of the management information. For reproduction, copy or move of program contents stored in the internal recording medium 113 or the removable recording medium 118, the contents management information analyzing portion 120 delivers the title of the program contents, date and time of the start/end of the program, copy information, the copy number, etc. to the control portion 114 so that the program contents can be selected through the user operating portion of the remote controller etc. of the user interface portion 115 and the control portion 114. In addition, the contents management information analyzing portion 120 delivers key information for decoding encoded data to the reading portion 111.

The reading portion 111 is controlled through the buffer managing portion 107 or the control portion 114 to thereby read management information stored in the internal recording medium 113 or the removable recording medium 118, output the read management information to the contents management information analyzing portion 120, read encoded data successively from the internal recording medium 113 or the removable recording medium 118, and output, to the time stamp comparing/outputting portion 109, each transport packet which is added with a time stamp and which is obtained by decoding the encoded data based on the key information sent from the contents management information analyzing portion 120.

The time stamp comparing/outputting portion 109 compares a counter value of the counter operating based on the fixed clock generating portion 117 such as a crystal oscillator, with the time stamp of the transport packet added with the time stamp and read by the reading portion 111. When the counter value of the counter is consistent with the time stamp of the transport packet, the time stamp comparing/outputting portion 109 deletes (removes) the time stamp from the transport packet and outputs the transport packet without the time stamp to the selector 102 and the network interface portion 106. Incidentally, in the case where the buffer managing portion 107 monitors the remaining volume of the input buffer 104 so as to control the reading portion 111 in accordance with the volume as described above, the time stamp may be deleted from the transport packet without comparing the counter value with the time stamp so that the transport packet without the time stamp is outputted to the selector 102 and the network interface portion 106. Output by this method is particularly preferable at the time of reproduction other than ordinary reproduction (one-fold speed reproduction).

The network interface portion 106 is connected to another device (a recorder, a display, a personal computer, etc. in the house, or a server etc. out of the house) as an output destination/input source through a line (an IEEE 1394 cable, an LAN cable, wireless, etc.). The network interface portion 106 receives the transport packets of video/audio etc. from which the time stamps have been deleted by the time stamp comparing/outputting portion 109, converts these transport packets in formats in compliance with respective transmission standards, and outputs the converted transport packets to the other device as an output destination through the line. Incidentally, the number of network interface portions 106 may be plural.

### <Reception and Recording Processing Relevant to Copy Control Information>

A detailed example of processing of the receiver 3 relevant to the copy control information which is sent out from the transmitter 1 and which is described with reference to Figs. 3 to 6 will be described.

Fig. 7 shows an example of the processing for each field of a content availability descriptor in the receiver 3.

When "descriptor_tag" is "OxDE", decision is made that the descriptor is a content availability descriptor. The descriptor length of the content availability descriptor is decided based on "descriptor_length". When
"digital_recording_control_mode" is "1" and if the digital copy control information indicates "copy-one-generation", decision is made that the program is a subject of "copy-a-limited-number". When "digital_recording_control_mode" is "0" and if the digital copy control information indicates "copy-one-generation", decision is made that the program is not a subject of "copy-a-limited-number". Irrespective of any value entered in "image_constraint_token", decision is made that constraint on resolution of output of a video signal is not performed. Irrespective of any value entered in "retention_mode", decision is made that temporary retention is permitted. Irrespective of any value entered in "retention_state", decision is made that the maximum permissible temporary retention time is 1 hour 30 min. When "encryption_mode" is "1" and if the digital copy control information indicates "copy-free", decision is made that protection is not applied to high-speed digital interface output. When "encryption_mode" is "0" and if the digital copy control information indicates "copy-free", decision is made that protection is applied to high-speed digital interface output.

Incidentally, in the case where the content availability descriptor is not placed (sent out) for some reason, each field may be regarded as the following values. Digital_recording_control_mode = "1", image_constraint_token ="1", retention_mode = "0", retention_state = "111", and encryption_mode = "1".

Fig. 9 shows a control example in which the receiver 3 retains (records) program contents by use of copy control information.

The contents shown in Fig. 9 are as follows. When, for example, program contents are retained and in the case where digital_recording_control_data of a digital copy control descriptor is "10" indicating "copy-one-generation", copy control information on a recording medium is stored as "no-more-copies". In addition, when digital_recording_control_mode is "1", copy control information on a recording medium is stored as "copy-a-limited-number". Even in the case where the copy control information is stored as "no-more-copies", the value of digital_recording_control_data of the digital copy control descriptor need not be changed.

When digital_recording_control_data of the digital copy control descriptor is "10" indicating "copy-one-generation", generation of a plurality of copies is not permitted. However, retention into an area where the user cannot access for the purpose of backup is an exception. The aforementioned constraint is imposed on each broadcasting reception portion. When there are broadcasting reception portions, the aforementioned constraint is imposed on each of the broadcasting reception portions.

In terms of copying a limited number, N copies can be generated from program contents which are stored as "copy-a-limited-number". The value N need be complied, for example, with a standard. In the case where copy is generated via high-speed digital interface output, the copy may be made by use of a move function etc. when the number of copies generated can be confirmed. For example, copy can be made in the case where it is possible to recognize that the device has an interface according to IEEE 1394 and an output destination according to a DTCP standard. Incidentally, the generated copy is set to be "no-more-copies" or an equal state to "no-more-copies".

In the case where program contents retained as "copy-a-limited-number" are reproduced and outputted, the program contents are outputted by the high-speed digital interface after subjected to a no-more-copies process defined in the DTCP (Digital Transmission Content Protection). Analog video output and digital audio output can be outputted as "copy-one-generation". The total copy number for contents marked as "Copy-A-Limited-Number" is limited to 10, inclusive of both a copy source and a copy destination. In addition, in the case where there are a recording function for recording onto a removable recording medium and a move function via high-speed interface output, limitation is performed inclusively of these functions. Specifically, for example, contents of the copy source and the copy destination except analog video and audio output and digital audio output are limited in copy number or prohibited from being copied (No-More-Copies) respectively. If it is within the limitation, contents of the copy source or the copy destination may be moved.

Incidentally, information such as a thumbnail used only for the purpose of contents management is regarded as information excluded from copy. In addition to a thumbnail generated from video information, for example, information using audio information or information using subtitle information may be used as the information for the purpose of contents management.

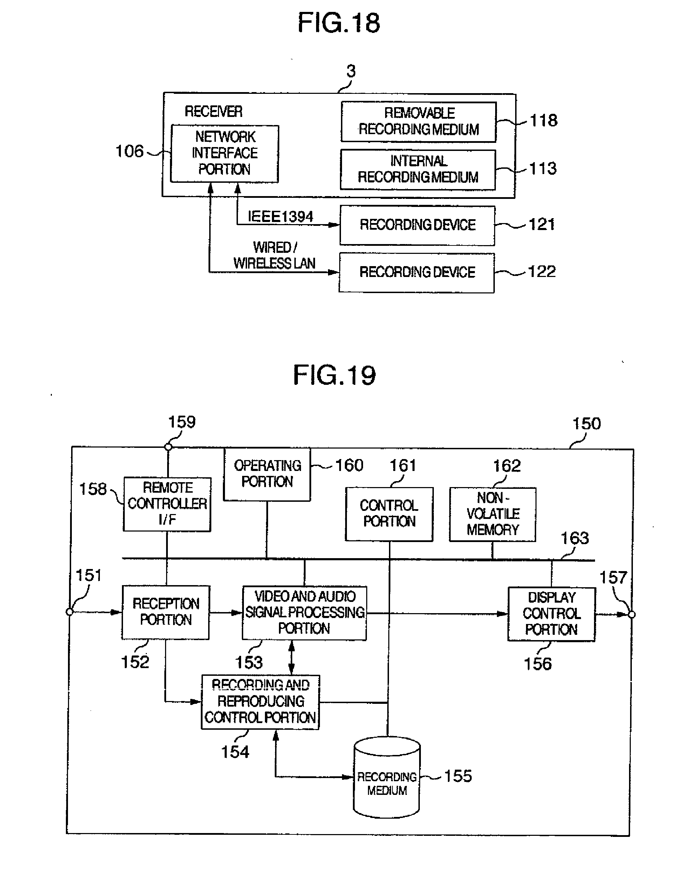

Fig. 18 is a view for understanding the aforementioned limitation in copy number. In Fig. 18, the receiver 3, the network interface portion 106, the internal recording medium 113, the removable recording medium 118, a recording device 121 and a recording device 122 are shown. For example, the recording device 121 is connected to the network interface portion 106 through IEEE 1394 and DTCP is used as a copyright protection system. For example, the recording device 122 is connected to the network interface portion 106 through a wired LAN or a wireless LAN and DTCP-IP (Digital Transmission Content Protection over Internet Protocol) is used as a copyright protection system. In the case where, for example, connection is made in this manner, the total copy number for contents marked as "Copy-A-Limited-Number", received from a broadcast wave and contained in the internal recording medium 113, the removable recording medium 118, the recording device 121 and the recording device 122 need be limited to 10.

In this case, for example, there are one piece of contents in a copy-four state in the internal recording medium 113, one piece of contents in a copy-two state in the removable recording medium 118, one piece of contents in the recording device 121 and one piece of contents in the recording device 122. When a broadcast wave is received and recorded, the broadcast wave may be simultaneously recorded in the internal recording medium 113, the removable recording medium 118, the recording device 121 and the recording device 122 so as to reach the aforementioned number. Alternatively, the broadcast wave may be recorded only in the internal recording medium 113 and then copied to the removable recording medium 118, the recording device 121 and the recording device 122.

In this manner; making copies of recorded program contents marked as "Copy-One-Generation" can be performed without being bound by time so that there is an effect that user friendliness is improved. In addition, when a broadcast wave is received and recorded, a plurality of copies of the same program can be simultaneously recorded onto a plurality of recording media or recording devices so that there is an effect that protection of contents is attained while user friendliness is attempted.

Incidentally, although description has been made in the case where the aforementioned recording devices 121 and 122 are connected through IEEE 1394 and an LAN respectively, the connections are not always limited to IEEE 1394 and an LAN but may be performed by other connection methods.

When the recording medium is a removable recording medium, there is another constraint in addition to those in Fig. 9. When program contents having a digital copy control descriptor in which digital_recording_control_data is "10" indicating "copy-one-generation" are received and recorded in digital recording of TV or data service or digital recording of audio service in terms of digital recording of program contents onto a removable recording medium, the received contents are not permitted to be copied three or more times even if the received contents are copied for the first generation (when, for example, a broadcast is received and recorded, the broadcast is not permitted to be recorded onto three or more recording media simultaneously). This value (set to be three or more by way of example) need be complied, for example, with a standard. A plurality of copies of one generation in the same recording format are not permitted to be generated. However, digital recording into an area where a user cannot access for the purpose of backup is an exception. The recording constraint for a digital recording medium is imposed on each broadcast reception portion. When there are broadcast reception portions, the recording constraint is imposed on each of the broadcast reception portions. When a recording system not compatible with digital_recording_control_mode is installed in the receiver, program contents with a digital copy control descriptor in which copy_control_type is "01" and digital_recording_control_data is "10" are digitally recorded as "copy-one-generation" irrespective of the value entered in digital_recording_control_mode of the content availability descriptor.

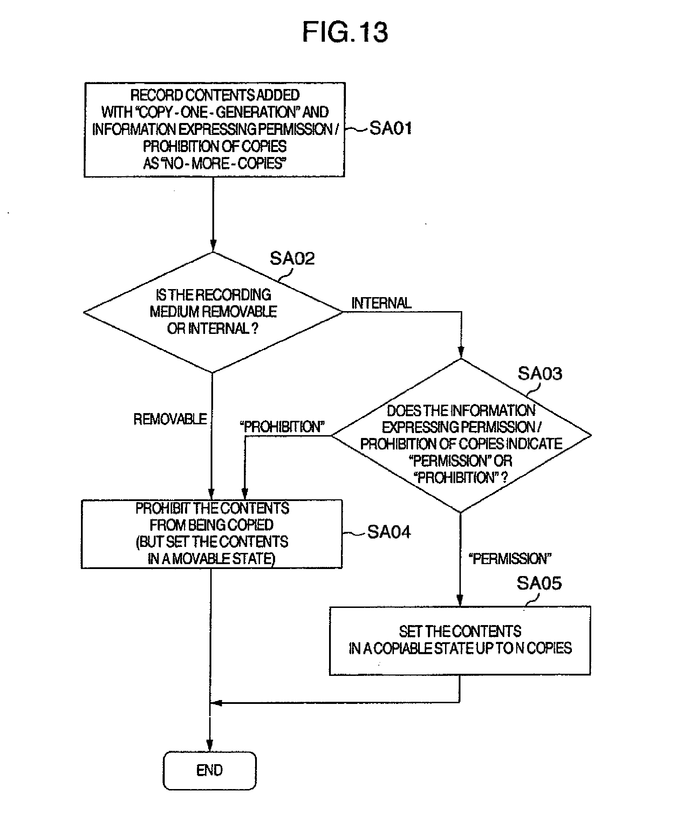

Fig. 13 is a flow chart showing an example of a procedure for generating copy information and copy number of management information in the case where program contents marked as "Copy-One-Generation" are recorded by the receiver 3.

When the contents management information generating portion 119 recognizes that the program contents are marked as "Copy-One-Generation" and added with information expressing permission/prohibition of copies from the copy generation control information and the information expressing permission/prohibition of copies from the separation and extraction portion 103, the contents management information generating portion 119 inputs "01" in the copy information of the management information for permitting copy no more, that is, for No More Copies (SA01).

A notice as to whether the recording medium recording the program contents is internal or removable is sent, for example, to the contents management information generating portion 119 to the control portion 114 (SA02).

When the recording medium is removable, for example, "0" is inputted in the copy number of the management information so that the program contents are set in a movable state but prohibited from being copied (SA04). Incidentally, regarding the relation with an operation for prohibiting three or more copies as described above, the above description is made on copy control when, for example, a broadcast is received and will be recorded (when first-generation copy will be generated), while the description of Fig. 13 is different from the above description but made on copy control after a broadcast has been recorded in a recording medium (after first-generation copy has been generated).

When the recording medium is internal, the contents management information generating portion 119 judges whether the information expressing permission/prohibition of copies is "Permission" or "Prohibition" (SA03).

When decision is made that the information is "Prohibition", for example "0" is inputted in the copy number of the management information so that the program contents are set in a movable state but prohibited from being copied (SA04). Of course, deletion etc. is also permitted.

When decision is made that the information is "Permission", "N" is inputted in the copy number of the management information so that the copiable number of the program contents is set as N (SA05).

In this manner, making copies of recorded program contents marked as "Copy-One-Generation" can be performed without being bound by time so that there is an effect that user friendliness is improved. Further, judgment as to permission/prohibition of copies is made based on whether the recording medium is internal or removable. Thus, in the case where the recording medium is internal, management is performed by locally encoding the program contents and further encoding the key information, the copy information and the copy number in the management information as described above, so that malicious alteration can be avoided. On the other hand, in the case where the recording medium is removable, various management methods can be conceived but it may be also considered that malicious alteration cannot be avoided because there are some program contents which cannot be managed as in the aforementioned case of the internal recording medium. In this respect, there is an effect that protection of the contents is attained while user friendliness is attempted.

### <Copy Process Relevant to Copy Control Information>

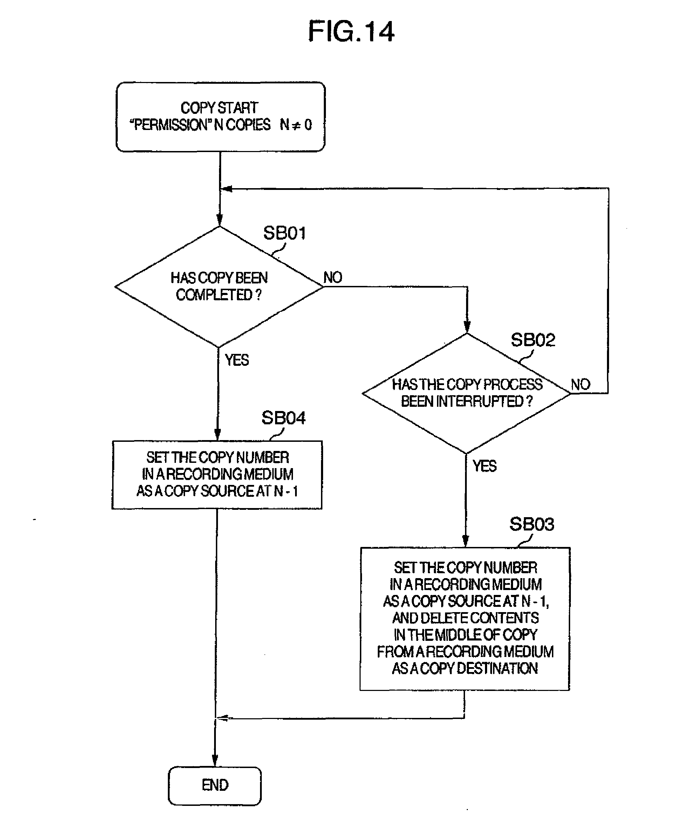

Fig. 14 is a flow chart showing an example of a procedure for copying program contents by the receiver 3.

When program contents having management information in which copy information and the copy number indicate "01" (No More Copies) and "N" (N≠0) respectively are being copied, whether the copy process has been completed or not is monitored (SB01).

When the copy process has been completed, "N-1" (N≠0) is inputted in the copy number of the management information of the recording medium as a copy source so as to set the program contents in a copiable state up to N-1 copies, "01" (No More Copies) is inputted in copy information of management information of a recording medium as a copy destination so as to set the program contents in a copy-no-more state, and "0" is inputted in the copy number of the management information of the recording medium as a copy destination so as to prohibit the program contents from being copied but set the program contents in a movable state (SB04).

When the copy process has not been completed, whether or not the copy process has been interrupted is monitored (SB02).

When the copy process has not been interrupted, whether or not the copy process has been completed is monitored (SB01).

When the copy process has been interrupted, "N-1" (N≠0) is inputted in the copy number of the management information of the recording medium as a copy source so as to set the program contents in a copiable state up to N-1 copies, and the program contents in the middle of copy are deleted from a recording medium as a copy destination in the case where the recording medium as a copy destination is recordable a plurality of times (SB03). In the case where the recording medium as a copy destination is recordable only once, the program contents in the middle of copy are not allowed to be deleted from the recording medium as a copy destination so that the deletion process is not executed.

In this manner, there is an effect that copy generation management of the program contents in the copy destination can be performed surely. Even in the case where the copy process has interrupted for some reason, unnecessary program contents do not remain in the copy destination. Thus, there is an effect that labor for deleting the unnecessary program contents is saved and user friendliness is improved. Incidentally, the aforementioned deletion may be performed in such a manner that data on the recording medium are deleted physically or the management information is deleted so that data on the recording medium are present but disabled from being reproduced (deleted indirectly).

### <Move Process Relevant to Copy Control Information>

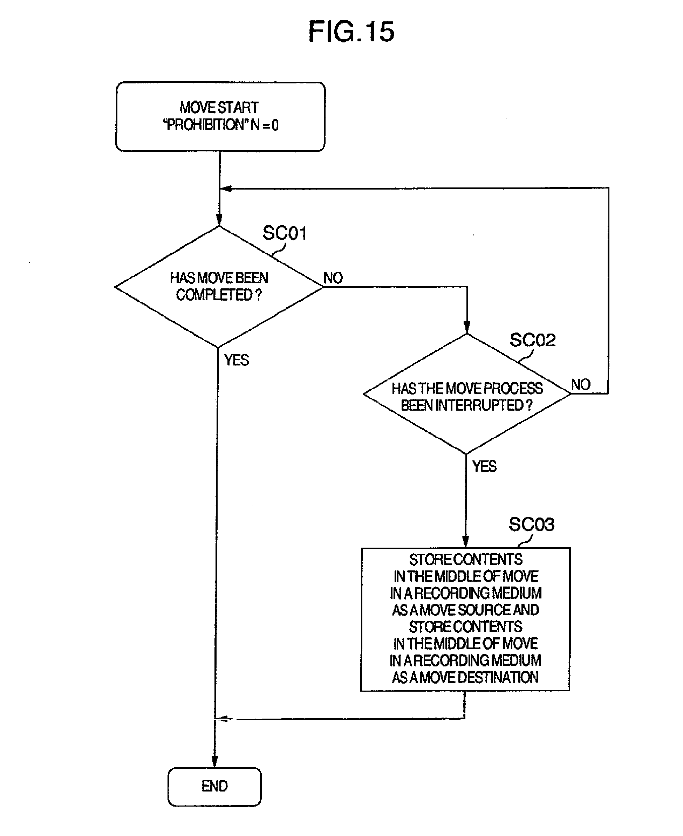

Fig. 15 is a flow chart showing a procedure for moving program contents of the receiver according to the embodiment.

When program contents having management information in which copy information and the copy number indicate "01" (No More Copies) and "0" respectively are being moved, whether or not the move process has been completed is monitored (SC01).

When the move process has been completed, the program contents of a recording medium as a move source and the management information relevant to the program contents are deleted, "01" (No More Copies) is inputted in copy information of management information of a recording medium as a move destination so as to set the program contents in a copy-no-more state, and "0" is inputted in the copy number of the management information of the recording medium as a copy destination so as to prohibit the program contents from being copied but set the program contents in a movable state.

When the move process has not been completed, whether or not the move process has been interrupted is monitored (SC02).

When the move process has not been interrupted, whether or not the move process has been completed is monitored (SC01).

When the move process has been interrupted, part of the program contents which are in the middle of move but have not been moved to the recording medium as a copy destination and the management information relevant to the program contents are stored in the recording medium as a move source, while the remaining part of the program contents which have already been moved to the recording medium as a move destination are disabled from being reproduced from the recording medium as a move source. The program contents in the middle of move are stored in the recording medium as a move destination, so that "01" (No More Copies) is inputted in copy information of management information so as to set the program contents in a copy-no-more state, and "0" is inputted in the copy number of the management information so as to prohibit the program contents from being copied but set the program contents in a movable state (SC03).

In this manner, there is an effect that copy generation management of the program contents in the move destination can be performed surely. Even in the case where the move process has interrupted for some reason, the program contents are stored respectively in the recording medium as a move source and the recording medium as a move destination so that the program contents are not disabled from being viewed due to the interruption. Thus, there is an effect that user friendliness is improved. Incidentally, the aforementioned deletion may be performed in such a manner that data on the recording medium are deleted physically or the management information is deleted so that data on the recording medium are present but disabled from being reproduced (deleted indirectly).

Incidentally, in the aforementioned description, the recording medium as a copy destination or a move destination is a recording medium which can be managed as No More Copies. When the recording medium cannot be thus managed, the copy or move process on the recording medium is prohibited.

Although the aforementioned description has been made in the case where the program contents are sent out from a broadcasting station, the invention is also applicable to program contents sent from any other entity than a broadcasting station such as a program contents distribution provider.

In addition, the removable recording medium means a recording medium which has an independent form so as to be removable from the receiver and which can be also reproduced in another device with a reproduction function.

Moreover, move means that move of program contents is performed in such a manner that the program contents recorded as "No More Copies" in one recoding medium are disabled from being reproduced from the recording medium after the program contents are copied to another recording medium. Being disabled from being reproduced means that reproduction is disabled by deletion of the program contents per se, deletion of the encryption key, deletion of the management information, etc. It is preferable that program contents with a length longer than 1 minute are not present in a reproducible state simultaneously in both the move source and the move destination in the middle of the move process.

In the aforementioned description, judgment as to whether to permit copies of program contents which are recorded as "Copy-One-Generation" and in which the information expressing permission/prohibition of copies indicates "Permission" is made based on whether the recording medium is internal or removable. However, judgment as to whether to permit a plurality of copies may be made based on a recording medium which can manage a plurality of copies and a recording medium which cannot manage a plurality of copies. The recording medium which can manage a plurality of copies means a recording medium which can manage to prevent malicious alteration of information, for example, about the copy information 507, the copy number 508 and the key information 506 (which may also include the file number 503, the date and time 504, the head address and recording size 505 of the data region, etc.) in the management information indicating details of the program contents as shown in Fig. 12.

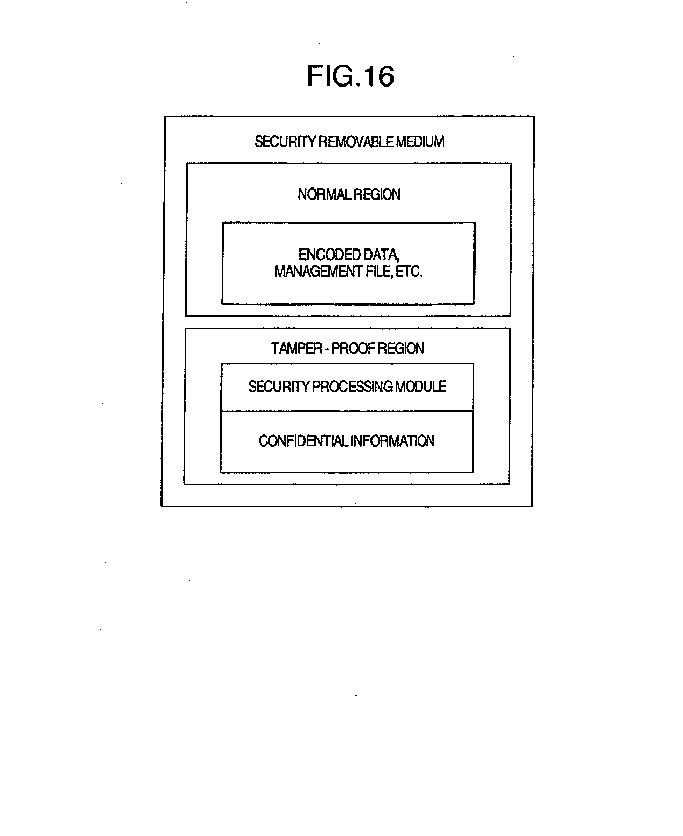

Fig. 16 shows an example of configuration of such a recording medium (security removable medium) which can manage a plurality of copies (also referred to as copy number control or number control copy). The recording medium is configured to have both a normal region where a user can access and a tamper-proof region where the user cannot access. Confidential information stored in the tamper-proof region can be accessed only when authentication has been confirmed by an authentication process with a device which can handle this recording medium. In this manner, the confidential information can be managed. Information about the copy information 507, the copy number 508 and the key information 506 is stored in the tamper-proof region and managed so that malicious alteration of the information can be prevented.

On the other hand, the recording medium which cannot manage a plurality of copies means a recording medium which cannot manage to prevent malicious alteration of information about the copy information 507, the copy number 508 and the key information 506 (which may also include the file number 503, the date and time 504, the head address and recording size 505 of the data region etc.) in the management information expressing details of the program contents.

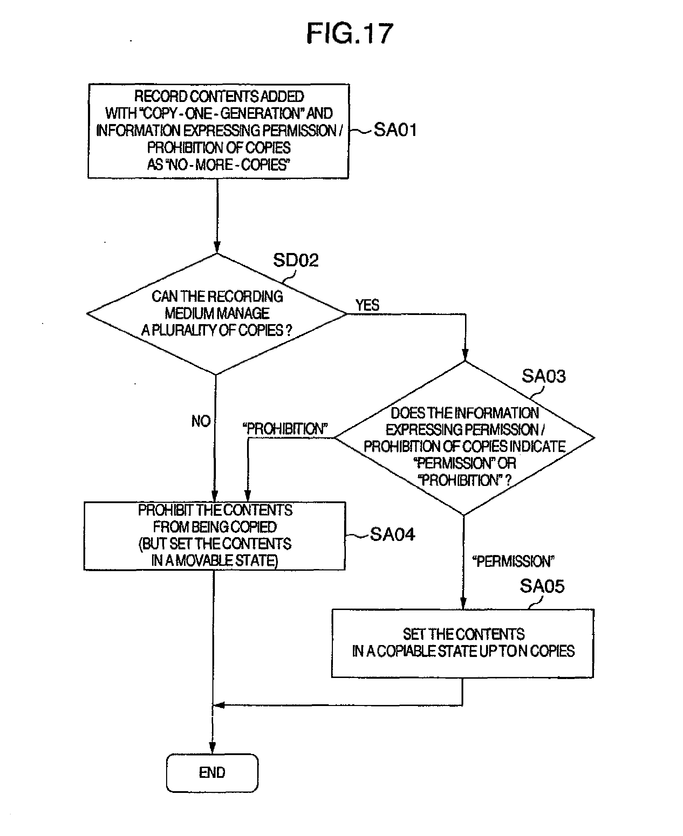

Fig. 17 is a flow chart showing an example of a procedure for generating copy information and copy number of management information in the case where program contents marked as Copy-One-Generation are recorded by the receiver in consideration of a recording medium which can manage a plurality of copies and a recording medium which cannot manage a plurality of copies. Fig. 17 is different from Fig. 13 in SD02. Incidentally, Fig. 17 may be combined with Fig. 13. For example, SD02 may be executed when decision in SA02 is made that the recording medium is removable.

Judgment as to whether the recording medium for recording the program contents is a recording medium which can manage a plurality of copies or a recording medium which cannot manage a plurality of copies is, for example, made by the control portion 114 and a notice indicating a result of the judgment is sent to the contents management information generating portion 119 (SD02).

When decision is made that the recording medium is a recording medium which cannot manage a plurality of copies, for example, "0" is inputted in the copy number of the management information so as to prohibit the program contents from being copied but set the program contents in a movable state (SD04).

When decision is made that the recording medium is a recording medium which can manage a plurality of copies, the contents management information generating portion 119 judges whether the information expressing permission/prohibition of copies is "Permission" or "Prohibition" (SD03). When decision is made that the information expressing permission/prohibition of copies is "Prohibition", for example, "0" is inputted in the copy number of the management information so as to prohibit the program contents from being copied but set the program contents in a movable state (SD04). When decision is made that the information expressing permission/prohibition of copies is "Permission", for example, "N" is inputted in the copy number of the management information so as to set the program contents in a copiable state up to N copies (SD05).

In this manner, making copies of recorded program contents marked as "Copy-One-Generation" can be performed without being bound by time so that there is an effect that user friendliness is improved. In addition, judgment as to whether copies are permitted or prohibited is made based on whether the recording medium is a recording medium which can manage a plurality of copies or a recording medium which cannot manage a plurality of copies so that permission of copies can be prevented from being given to the recording medium which cannot manage a plurality of copies. Thus, there is an effect that the program contents can be protected more surely.

In the aforementioned description, in the case where digital copy control information is "Copy-One-Generation", decision is made that the program is a subject of "Copy-A-Limited-Number" when "digital_recording_control_mode" is "1", and decision is made that the program is not a subject of "Copy-A-Limited-Number" when "digital_recording_control_mode" is "0". However, decision for "1" and "0" may be set reversely, for example, in accordance with system convenience of a broadcasting station.

That is, in the case where digital copy control information is "Copy-One-Generation", decision may be made that the program is a subject of "Copy-A-Limited-Number" when "digital_recording_control_mode" is "0", and decision may be made that the program is not a subject of "Copy-A-Limited-Number" when "digital_recording_control_mode" is "1". Similarly, meanings of other values indicated in the descriptors may be changed to different settings in accordance with circumstances.

In addition, it is desirable that meanings of values indicated in the respective descriptors such as the value of "digital_recording_control_mode" are standardized to be determined uniquely.

Moreover, it is not necessary to use titles of the content availability descriptor and the digital copy control descriptor
("digital_recording_control_mode",
"digital_recording_control_data", etc.) as the titles in the embodiment. Other titles may be used instead.

### <Receiver (2) >

Fig. 19 shows an example of configuration of a recording and reproducing device 150 as an example of the reception recording and reproducing portion 10 in the receiver 3. The recording and reproducing device 150 may be a device having only one of recording and reproducing functions.

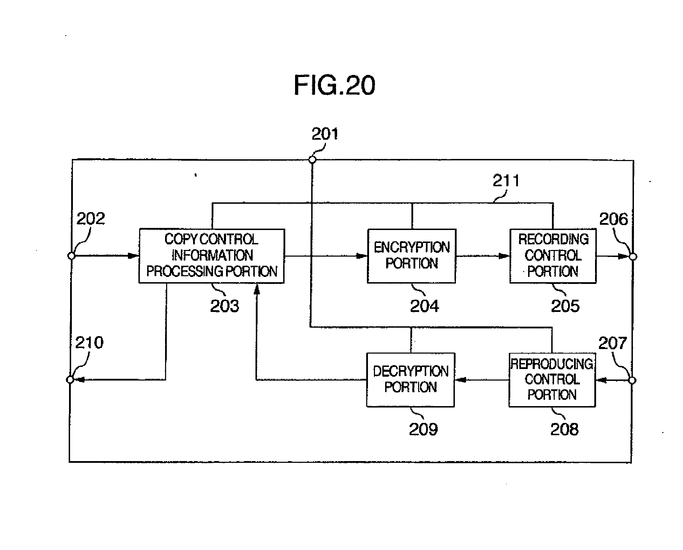

The reference number 151 designates an input terminal which receives digital data of a radio wave etc. from the relay device 2; 152, a reception portion which performs frequency conversion, modulation, error correction, etc. on the digital data received from input terminal 151 and separates the multiplexed bit stream in one transponder into packets of video, audio etc.; 153, a video and audio information processing portion which decodes video data and audio data; and 154, a recording and reproducing control portion which controls recording or reproduction on/from a recording medium. An example of further detailed internal configuration of this module of the recording and reproducing portion 154 will be shown in Fig. 20. The reference numeral 155 designates a recording medium which records digital data, such as a hard disk drive; and 156, a display control portion which generates output data from the video and audio data and interface (IF) display data for each kind of application. The display control portion 156 scales up/down the video data, for example, processed by the video and audio processing portion 153 in accordance with necessity, and generates display images by overlapping the video data with image data originally prepared by the recording and reproducing device 150 such as an operation interface or still images. The reference numeral 157 designates an output terminal which transfers the generated data to a display device such as a liquid crystal display panel; 158, a remote controller IF when a user uses a remote controller to perform operation; 159, an input terminal which is a light-receiving portion for receiving a signal from the remote controller; 160, an operating portion provided with a group of buttons for performing operations such as recording, reproduction, etc. so that a user can directly operate one of the buttons to perform control of the recording and reproducing device 150; 161, a control portion which controls operation of the recording and reproducing device 150 and which is, for example, made of a CPU; 162, a non-volatile memory for recording information; and 163, a system bus which performs data communication among respective blocks connected to the control portion 161.

Fig. 20 shows an example of configuration of the recording and reproducing control portion 154.

The reference numeral 201 designates an input and output terminal which is connected to the system bus 163 for transmitting a control signal; 202, an input terminal which receives digital data including video data and audio data recorded on a recording medium; 203, a copy control information processing portion which analyzes copy control information contained in the digital data and updates the copy control information in accordance with necessity; 204, an encryption portion which encrypts the received digital data, for example, by a method of using key information transmitted by the control portion 161; 205, a recording control portion which issues a command for performing recording onto a recording medium and performs a process such as transmission of the digital data; 206, an output terminal which is connected to the recording medium; 207, an input terminal which receives digital data reproduced from the recording medium; 208, a reproducing control portion which issues a command to the recording medium so as to reproduce desired digital data; 209, a decryption portion which decrypts the read encoded digital data, for example, by a method of using key information transmitted by the control portion 161; 210, an output terminal which outputs the decrypted digital data; and 211, a system bus which performs data communication among respective blocks connected to the control portion.

For example, copy control information processed by the copy control information processing portion 203 contains copy generation management information and copiable number information. For example, the copy generation management information is considered to made designation by use of the following 2-bit signal:
11 Copy-never
01 No-more-copies
10 Copy-one-generation
00 Copy-free

The copiable number information is expressed by a positive number not smaller than 0 and considered to designate the copiable number.

When a piece of digital data is retained in a recording medium 155, the control portion 161 performs control, for example, based on a digital copy control descriptor and a content availability descriptor contained in the piece of digital data. For example, the digital copy control descriptor is expressed by a signal consisting of copy_control_type and digital_recording_control_data. For example, the content availability descriptor is expressed by a signal consisting of encryption_mode and digital_recording_control_mode. The control portion 161 instructs the copy control information processing portion 203 to update the copy control information of the retained piece of digital data and instructs the encryption portion 204 to perform encryption or not perform encryption in accordance with the values of these descriptors.

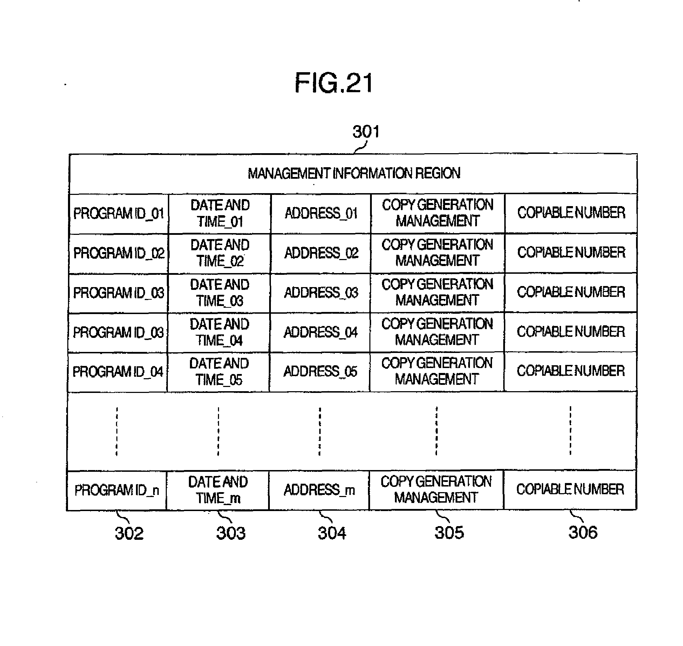

Fig. 21 is an embodiment showing a copy control information recording region 301 held in the recording medium 155. The reference numeral 302 designates a program ID indicating a piece of digital data. For example, each piece as a unit is from the start to the end of a broadcasted program or a range of one and the same copy control information in one and the same program. The reference numeral 303 designates date and time when the program and the copy control information are recorded; 304, address information expressing an address where the piece of data is recorded on the recording medium 155; 305, copy generation management information of the piece of digital data; and 306, copiable number information of the piece of digital data.

For example, an output terminal may be connected to the recording and reproducing control portion 154 or another set of a recording and reproducing control portion and an output terminal may be prepared in the recording and reproducing device so that when a piece of digital data recorded once on the recording medium 155 is outputted, the control portion 161 performs updating of copy control information of the piece of digital data to be copied properly in accordance with the copy control information contained in the piece of digital data and an output interface, so that the control portion 161 instructs the copy control information processing portion 203 to update the copy control information of the piece of data to be outputted, and instructs the decryption portion 209 to perform decryption or not perform decryption of the piece of digital data.

When, for example, a piece of digital data in which the copy generation management information indicates No-more-copies and the copiable number information for which is 8 in the recording medium 155 is copied to another recording medium, the copy generation management information and the copiable number information of the original piece of digital data are updated to No-more-copies and 7, respectively, irrespective of whether the copy succeeded or failed. Rewriting of the copy control information of the piece of digital data copied to a different recording medium depends on the output interface. When, for example, the piece of digital data is outputted to a randomly accessible removable recording medium such as a Blu-ray disc, a semiconductor memory, a magnetic disk, an optical disc, a photomagnetic disc, etc., the copy generation management information is outputted as No-more-copies. When, for example, the output is made through a high-speed digital interface, the copy generation management information is outputted as No-more-copies. When, for example, the output is analog video, the copy generation management information is outputted as Copy-one-generation.

The case where a piece of digital data marked as No-more-copies is moved from another recording and reproducing device or another recording medium supporting move of the digital data to the recording and reproducing device 150 having the aforementioned configuration will be considered. On this occasion, both the piece of digital data with the copy control information indicating Copy-one-generation and the piece of digital data with equivalent contents (such as with a consistent program title etc.) but with the copy control information indicating No-more-copies may be retained in the recording medium 155 in the recording and reproducing device 150. In this case, a user of the recording and reproducing device 150 may be confused because the user cannot tell one piece of copy control information from the other piece of copy control information at a glance.

Incidentally, programs with equivalent contents are, for example, programs broadcasted in the same date and time but recorded on different devices, or a broadcasted program and a rebroadcasted program. Judgment as to whether or not the programs are equivalent is made, for example, based on program identification information such as program title, program number, channel, broadcasting date and time, and broadcasting area. Program length (time), an analysis result of program contents (video and audio data), etc. may be added to the judgment factors as to whether or not the programs are equivalent. The fact that the contents are equivalent can be also expressed as the fact that the contents of the program are duplicate. Detection thereof may be made as follows. For making judgment as to whether or not the contents are equivalent, these pieces of information are not necessarily completely consistent. Decision can be made that the contents are equivalent (considered as equivalent) when at least part (e.g. title) of the pieces of information are consistent.

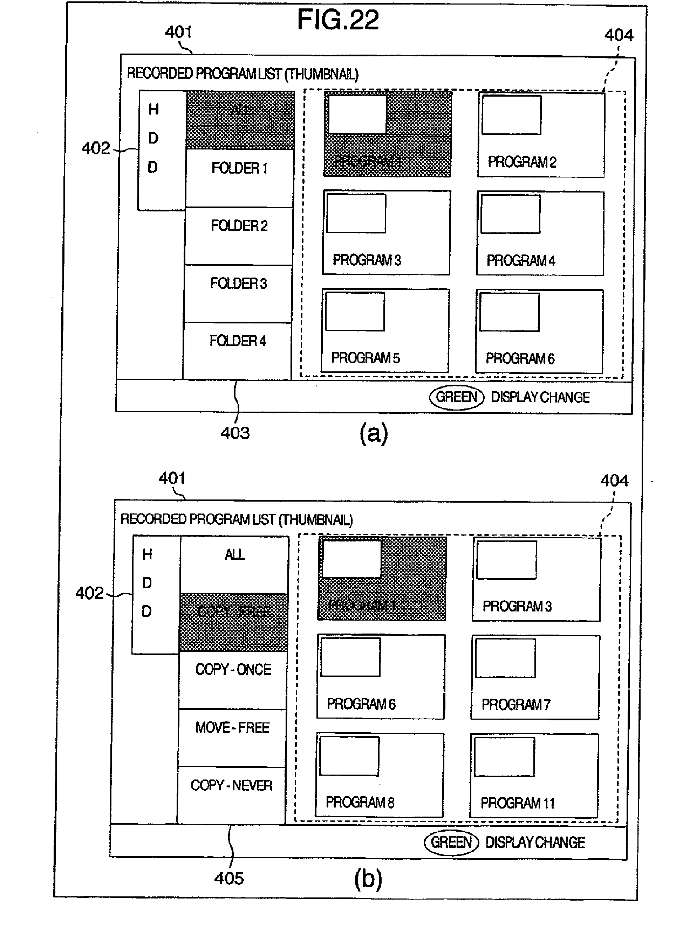

In consideration of the aforementioned problem, Fig. 22 shows an example in each of which a list of pieces of digital data recorded on a recording medium is classified into categories in accordance with copy control information and displayed.

In Fig. 22(a), the reference numeral 401 designates a display screen; 402, a title of a recording medium for displaying a list of pieces of recorded data; 403, display of a digital data category such as a folder name; and 404, display of a list of pieces of data corresponding to the designated category 403, from the pieces of digital data recorded on the designated recording medium 402. When, for example, a user performs a predetermined operation to select "All" from the categories 403, pieces of data recorded on the recording medium are displayed in the list 404 sequentially. When the user designates "Folder 1", only pieces of data classified in that folder by the user in advance are displayed in the list 404.

In Fig. 22(b), the reference numeral 405 designates a category in accordance with copy generation management information in place of display of the category 403 in accordance with file name. On this occasion, pieces of data corresponding to the designated category 405 of copy generation management information are displayed in the list 404. When, for example, the user performs a predetermined operation to select "Copy-free" from the categories 405, only pieces of data in which the copy generation management information indicates Copy-free are displayed in the list 404. When the user selects "Copy-once" (or "Copy-one-generation"), pieces of data in which the copy generation management information indicates Copy-one-generation are displayed in the list 404. On this occasion, pieces of data in which the copy generation management information indicates "No-more-copies" and the copiable number for which is a positive number may be displayed in the category "copy-once" or pieces of data in which the copy generation management information indicates Copy-one-generation and the copiable number for which is 0 may be displayed in the category "Copy-never". In displaying, the copiable number information for each piece of data may be displayed together with data name.

When the user performs a predetermined operation on the remote controller or performs a predetermined operation on the operating portion 160, the control portion 161 changes the display between the display using the categories of the folder structure as shown in Fig. 22A and the display using the categories in accordance with the copy control information as shown in Fig. 22B.

When pieces of digital data are displayed in the aforementioned manner in the case where a plurality of pieces of copy control information are mixed, the pieces of digital data corresponding to the respective pieces of copy control information can be grasped easily so that user friendliness can be improved.

In the aforementioned embodiment, the same effect can be also obtained by a process of making judgment as to whether or not copy as analog data is permitted. For example, categories "Analog-copy-free" and "Analog-copy-never" are provided in the categories 405 in accordance with classification of the copy control information as shown in Fig. 22(b) so that programs corresponding to each status are displayed in a region of the list 404. Alternatively, the user may perform a predetermined operation to change the category display to display of a list specialized only in the copy control information about analog copy.

The case where a piece of data is copied when a plurality of pieces of digital data equivalent in contents but different in copy control information are present in the recording medium 155 will be considered.

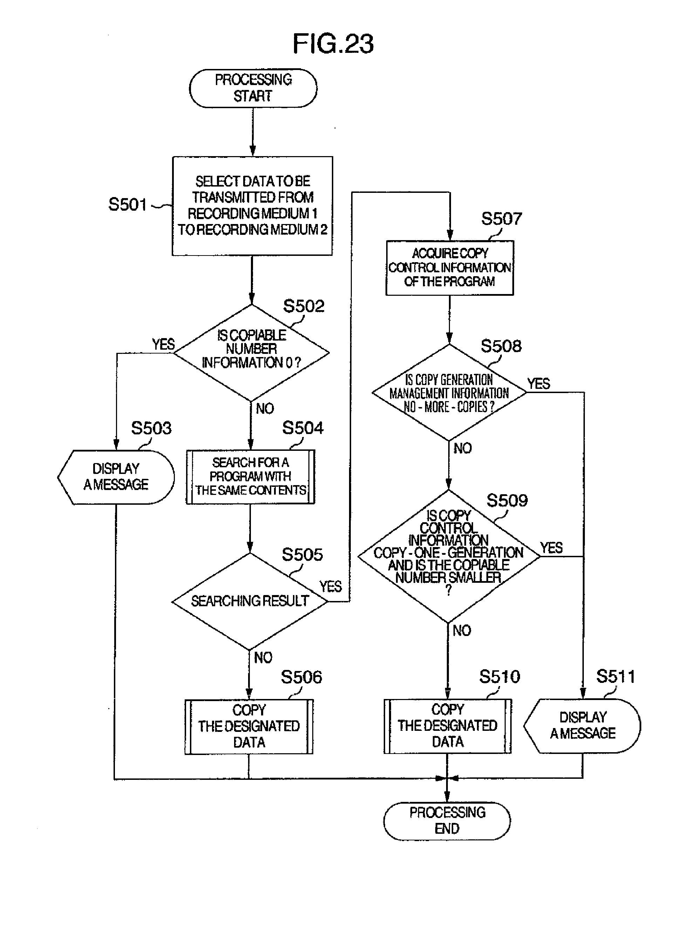

Fig. 23 is a flow chart showing an example of operation for copying a piece of data in which the copy generation management information indicates Copy-one-generation. The subject for performing processing of the flow chart is basically the control portion 161.

When a user selects a piece of data to be copied, the control portion 161 acquires copy control information of the selected piece of data in S501 and then the routine of processing shifts to S502. In S502, the control portions 161 judges whether or not copy is permitted, based on copiable number information. When the copiable number information is 0, the routine of processing shifts to S503. When the copiable number information is not 0, the routine of processing shifts to S504. A message indicating that copy is not permitted is displayed in S503 and then the processing is terminated. In S504, the control portion 161 searches for any piece of data with equivalent contents to the designated piece of data to be copied. Examples of information used for the searching include program title, recording time, etc. When the searching in S505 results in presence of a program with equivalent contents, the routine of processing shifts to S507. When the searching in S505 results in presence of no program with equivalent contents, the routine of processing shifts to S506. The designated piece of data is copied by a predetermined method in S506 and then the processing is terminated. Copy generation management information and copiable number information of the searched piece of data are acquired in S507 and then the routine of processing shifts to S508. Judgment as to whether or not the copy generation management information indicates No-more-copies is made in S508. When decision is made in S508 that the copy generation management information indicates No-more-copies, the routine of processing shifts to S511. When decision is made in S508 that the copy generation management information does not indicate No-more-copies, the routine of processing shifts to S509. Checking as to whether or not the copy generation management information of the searched piece of data indicates Copy-one-generation and the copiable number information is smaller than the copy number of data designated by the user is made in S509. When the copiable number information is smaller than the copy number of data designated by the user, the routine of processing shifts to S511. When the copiable number information is larger than the copy number of data designated by the user, the routine of processing shifts to S510. The piece of data designated by the user is copied in S510 in the same manner as S506, and then the processing is terminated. A notice indicating presence of a piece of digital data different in copy control information is sent to the user in S511, and then the processing is terminated. On this occasion, the piece of data may be copied and moved automatically and the piece of data designated by the user may be retained in the recording medium 155 as it is. When the searching in S505 results in presence of a plurality of pieces of data, the processing of S507 to S509 may be looped until the routine of processing goes to S511.

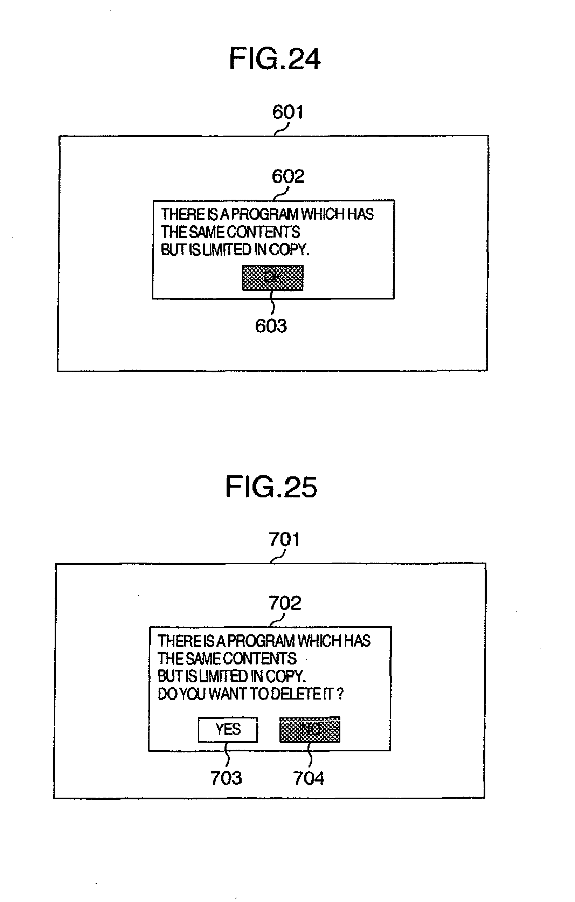

Fig. 24 is a schematic view showing an example of a message displayed in S511. The reference numeral 601 designates a display screen; 602, a displayed message; and 603, a button for making confirmation that the user has understood the message. When a predetermined operation such as an operation of pushing a "decide" button of the remote controller is performed, the original application is resumed.

In the case where there are a plurality of pieces of digital data equivalent in contents but different in copy control information, the aforementioned control makes the user notice presence of the different pieces of data when the message is displayed in S511, so that the user can perform a desired operation.

Also when, for example, the piece of data designated by the user has the copy generation management information indicating No-more-copies and the copiable number information indicating a positive number, the same effect can be obtained by searching a plurality of pieces of data equivalent in contents but different in copy control information in the same manner.

Next, the case where data deletion is performed when a plurality of pieces of digital data equivalent in contents but different in copy control information are present in the recording medium 155 will be considered. When the user is to delete one piece of data with the copy generation management information indicating Copy-one-generation, checking as to whether or not there are pieces of data equivalent in contents but different in copy information is performed in the same sequence as that of from S505 to S509.

In the case where there are a plurality of pieces of digital data equivalent in data contents but different in copy control information as a result, Fig. 25 shows one display example of a message for prompting deletion of a piece of data having a narrower availability range (e.g. the copy generation management information indicates No-more-copies, or the copiable number is small) because of presence of the plurality of pieces of data equivalent in contents but different in copy information. The reference numeral 701 designates a display screen; 702, a displayed message; and 703 and 704, buttons to be selected by the user for designating desired operations. When the button 703 is selected, the piece of data designated by the user is deleted. When the button 704 is selected, the piece of data designated by the user is not deleted. After selection of the button 704, the user can separately delete any of the pieces of data with different copy control information. When pieces of digital data with equivalent contents but with different copy control information are present in one recording medium, the aforementioned control can prevent a piece of data with a large copiable number from being deleted by error so that user friendliness can be improved. When the recording and reproducing device having a function of automatically deleting recording data is configured in such a manner that contents with a small copiable number is deleted with priority at the time of deletion, user friendliness can be further improved.

Next, a method for improving user friendliness when the recording and reproducing device 150 is used by a plurality of users will be considered.

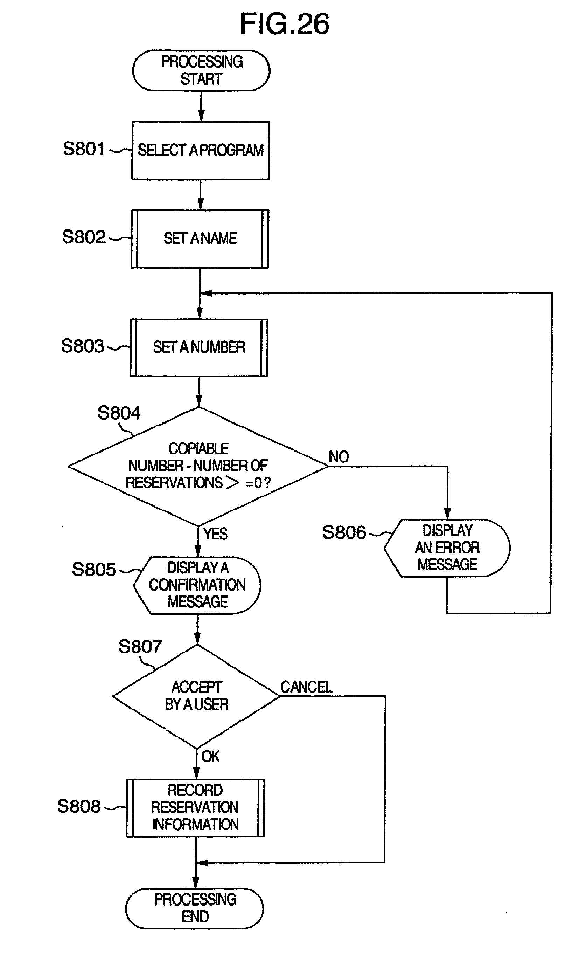

Fig. 26 is a flow chart showing an example of operation performed by a user of the recording and reproducing device 150 for making a reservation of a copy process.

Assume that one user is considering to copy a piece of data the copiable number information for which is a positive number. In S801, the user selects a program the user wants to copy. The user registers a name which can be identified as the user per se by an arbitrary method in S802, and then the routine of processing shifts to S803. As examples of the registration method, there are a method of entering an input on a soft keyboard by an operation on the remote controller, and a method of entering a character on a keyboard connected to the recording and reproducing device. The user sets the number of copy reservations by an arbitrary method in S803, and then the routine of processing shifts to S804. In S804, judgment as to whether or not the number of reservations set in S803 is valid is made, that is, checking as to whether or not the total number of reservations made up to now is larger than the copiable number information is made. If the total number of reservations made up to now is not larger than the copiable number information, the routine of processing shifts to S805. If the total number of reservations made up to now is larger than the copiable number information, the routine of processing shifts to S806. A message indicating reservation is permitted, the inputted name (i.e. name of the user making the reservation. A number etc. other than the name may be used), and the number of reservations are displayed on the screen in S805, and then the routine of processing shifts to S807. When setting of the number of reservations entered in S804 is not permitted, a message indicating that fact is displayed in S806, and then the routine of processing shifts to S803 in which resetting of the number of reservations is prompted. After viewing the confirmation screen displayed in S805, the user sends acceptance of the reservation setting in S807. When the user sends the acceptance, the routine processing shifts to S808. When the user cancels the acceptance, the control portion 161 aborts a series of input data and then terminates the processing. In S808, the control portion 161 records copy reservation information onto the recording medium 155 in accordance with a predetermined format.

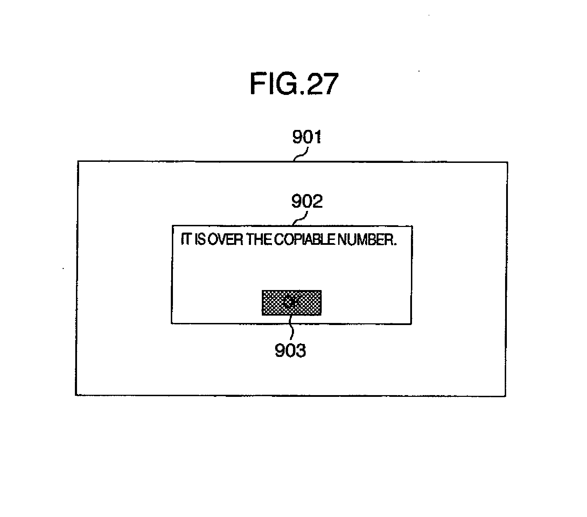

Fig. 27 is a schematic view showing an example of a message displayed in S806. The reference numeral 901 designates a display screen; 902, an example of a message; and 903, a button to be selected by the user.

Incidentally, even when the copy reservation information is recorded on a non-volatile recording medium 162, the same effect as that in the embodiment can be obtained.

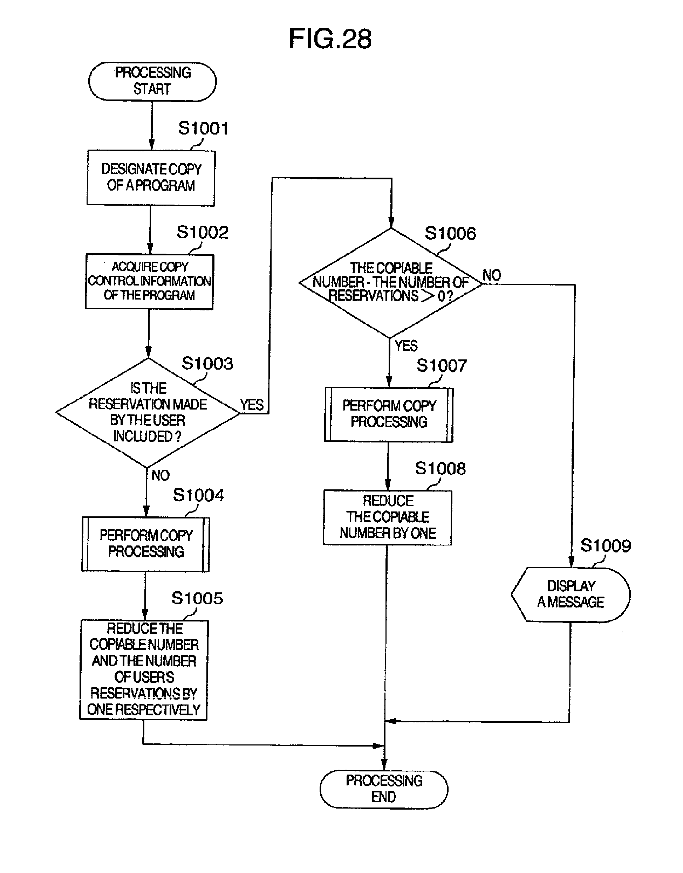

Fig. 28 is a flow chart showing an example of copy control using copy reservation information set in the aforementioned manner.

Assume that the recording and reproducing device 150 has a method which can recognize a current user name by a certain method. In S1001, a user designates a program to be copied. Assume that the designated program has copy reservation information attached thereto in the aforementioned sequence. The control portion 161 acquires copy control information and the copy reservation information of the designated program in S1002, and then the routine of processing shifts to S1003. When copy reservation information made by the current user is included in the copy reservation information in S1003, the routine of processing shifts to S1004. When copy reservation information made by the current user is not included in the copy reservation information in S1003, the routine of processing shifts to S1006. The designated program is copied in S1004, and then the routine of processing shifts to S1005. The copiable number for the program which has been copied is reduced by one and the number of copy reservations made by users is reduced by one in S1005, and then the processing is terminated. On this occasion, judgment as to whether or not copy has been completed normally may be made so that a message of a notice thereof can be displayed. When there is copy reservation information made by other users, judgment as to whether or not the copy reservation information is smaller than the copiable number is made in S1006. When the copy reservation information is smaller than the copiable number, the routine of processing shifts to S1007. When the copy reservation information is equal to the copiable number, the routine of processing shifts to S1009. The designated program is copied in S1007 in the same manner as S1004, and then the routine of processing shifts to S1008. The copiable number is reduced (subtracted) by one in S1008, and then the processing is terminated. On this occasion, a message for notifying whether or not copy has been completed may be displayed. A message indicating that copy is not permitted due to reservations made already is displayed in S1009, and then the processing is terminated. On this occasion, a message indicating users and the number of copies reserved respectively by the users may be displayed based on the copy reservation information.

The aforementioned control can prevent copy of a piece of data from being not executed because the piece of data which a user wants to copy later has been copied by other users unintentionally so that the copiable number becomes 0. Thus, user friendliness can be improved.

When the recording and reproducing device 150 does not have a means for recognizing a current user, there can be considered a method in which copy reservation information is displayed for asking the user at that time to decide whether to perform copy or not, in place of the sequence of S1006.

Next, the case where a piece of digital data recorded on the recording medium 155 is subjected to irreversible edition such as division in the recording and reproducing device 150 will be considered. In the case where copiable number information of a piece of digital data which the user wants to edit is a positive number, the piece of digital data is copied in the recording medium 155, and the piece of data in which copy generation management information indicates No-more-copies is duplicated and then edited. In the case where edition fails or in the case where a result of the edition is not satisfactory and the edited piece of data cannot be restored to the original status, edition can be performed again if the original piece of data the copiable number information for which is a positive number remains. Thus, user friendliness can be improved.

Next, a function of the recording and reproducing device 150 for automatically performing recording based on copy control information will be considered. When a broadcasting wave is received by the recording and reproducing device 150, digital data (also referred to as program guide information such as EPG data) in which a future broadcasting schedule is written for display of an electronic program guide are also received by the recording and reproducing device 150. Therefore, in the case where a piece of digital data the copiable number information for which has been reduced is retained in the recording medium 155, reservation recording is performed automatically when transmission of a piece of data with equivalent contents to the piece of digital data is detected from the future broadcasting schedule. When recording succeeds, the piece of digital data retained previously is aborted. Decision that the copiable number information has been reduced is arbitrary. For example, decision is made based on the condition that the copiable number information is smaller than 3. These processes may be executed by the control portion 161. Particularly, the portion for performing detection from the broadcasting schedule is also referred to as a broadcasting schedule analysis portion.

According to the aforementioned embodiment, the copiable number information about the contents with the same program contents can be increased in view from of the user (in fact, the copiable number is not increased but restored to the default value by recording the same program again) so that user friendliness can be improved.

### <Receiver (3)>

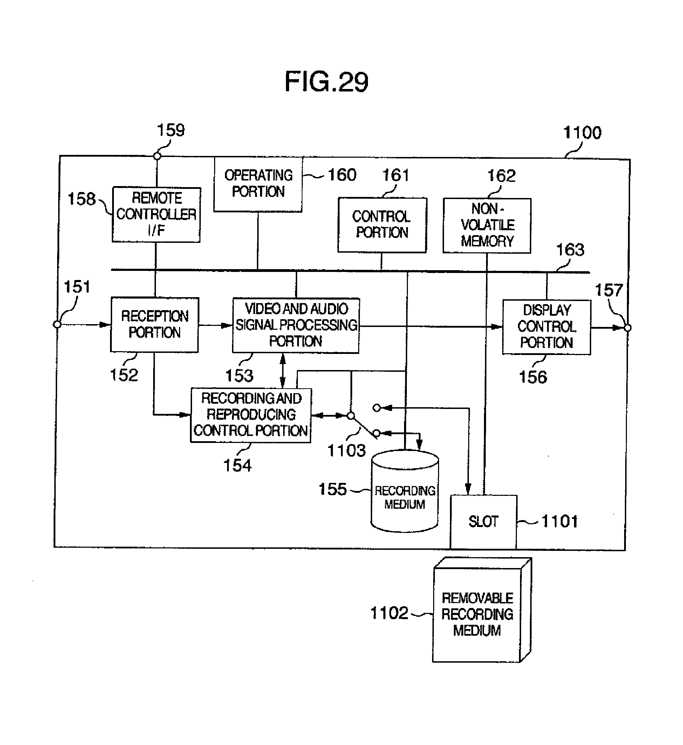

Fig. 29 is a block diagram showing an example of configuration of a recording and reproducing device 1100.

The reference numeral 1101 designates a slot (detachable mounting portion) into which a removable recording medium can be mounted; 1102, a removable recording medium on which data are recorded in the same recording format as the recording medium 155; 1103, a switch which selects output/input of data to/from one of recording medium 155 and the removable recording medium 1102 for the recording and reproducing control portion 154. Although there is only one switch shown in Fig. 29, it may be considered that different switches are prepared for input and output respectively, or the configuration in which recording and reproducing control portions are prepared respectively for the recording medium 155 and the removable recording medium 1102 may be considered.

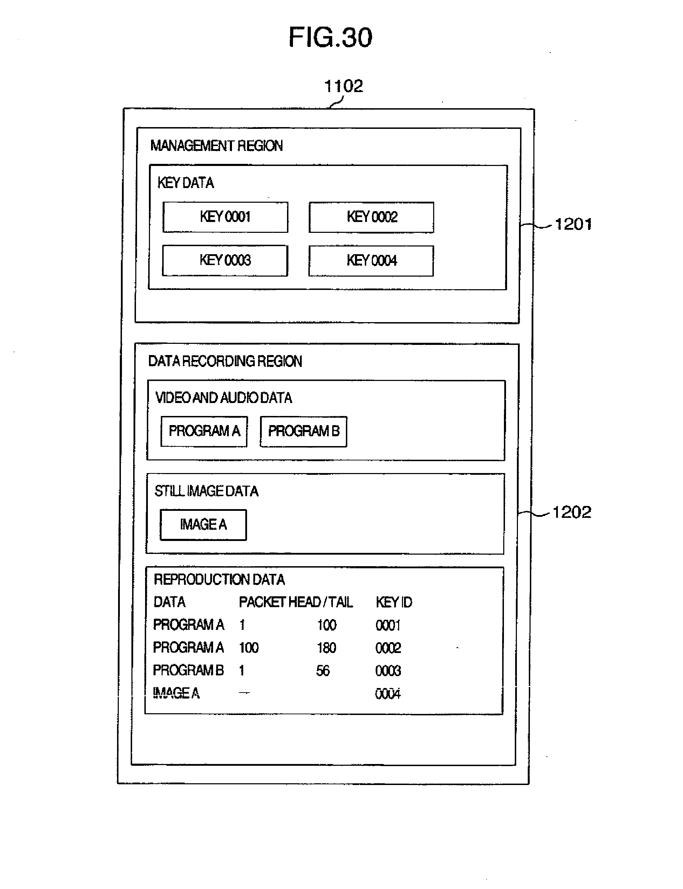

Fig. 30 shows an example of a preferable data structure of the removable recording medium 1102 (e.g. removable hard disk). The reference numeral 1201 designates a management region where a user cannot access. Key data with which digital data are encrypted and recorded in a data recording region 1202 are stored in the management region so that confidentiality is kept. The reference numeral 1202 designates a data recording region where the user can access internal data by a predetermined operation. The key data are recorded in the management region 1201. Information reproduction data for discriminating key information corresponding to each piece of data of the data recording region are recorded together with data such as video and audio data, still image data etc. in the data recording region 1202. Copy control information may be collectively recorded in the management region of such a removable recording medium 1102.

Fig. 16 shows an example of a preferable data structure of the recording medium of Fig. 30 in another expression. This recording medium (also referred to as security removable medium) is also referred to as a recording medium which can be copy-controlled. The copy control includes management for a plurality of copies (also referred to as copy number management, copy number control or number control copy) and/or management for copy generation (also referred to as copy generation management, copy generation control or generation control copy). One recording medium is provided with a normal region where a user can access and a tamper-proof region where the user cannot access. When authentication can be confirmed by an authentication process with a device which can handle the recording medium, confidential information stored in the tamper-proof region can be accessed so that the confidential information can be managed. The management region 1201 of Fig. 30 corresponds to the tamper-proof region and the data recording region 1202 of Fig. 30 corresponds to the normal region.

When a piece of digital data inputted from the input terminal 151 in the recording and reproducing device 1100 shown in Fig. 29 is recorded onto a removable recording medium 1102 (non-secure recording medium) in the case where the recording medium 1102 is a recording medium in which there is a possibility that, for example, management information and program information shown in Fig. 21 differently from those shown in Fig. 30 or 16 may be maliciously altered, or a recording medium which cannot be copy-controlled (recording medium certified as a format not adapted to copy control), the control portion 161 controls the copy control information processing portion 203 to record the copy generation management information as No-more-copies and the copiable number information as 0.

In the case where a piece of digital data recorded on the recording medium 155 is copied or moved to the non-secure recording medium (recording medium 1102), control is performed as follows. In the case where, for example, a piece of digital data the copiable number information (number-of-allowed-copies information) for which is a positive number and which is recorded on the recording medium 155 is recorded onto the removable recording medium 1102, the piece of digital data is decrypted by the decryption portion 209 in the recording and reproducing control portion 154, for example, copy generation management information of the piece of digital data is recorded as No-more-copies as it is and the copiable number information thereof is recorded as 0 by the copy control information processing portion 203, and the piece of digital data is encrypted by the encryption portion 204 and then outputted to the removable recording medium 1102. Necessary information for generation of a random key is delivered to the encryption portion 204 from the control portion 161 so that key data are generated by the encryption portion 204 and recorded in the management region 1201 by a command issued by the recording control portion 205 for writing into the management region. In the case of copy, the copiable number information of the piece of digital data recorded on the recording medium 155 is updated by reducing the copiable number by one. When the copiable number is 0, copy is not permitted. In the case of move, the piece of digital data recorded on the recording medium 155 is deleted. Thus, copyright protection with respect to a recording medium on which copy generation management cannot be performed can be attempted.

On the other hand, when the removable recording medium 1102 is a recording medium, for example, having the data structure shown in Fig. 30 or 16 so that the copy control information is recorded and managed in the management region where the user cannot access and there is therefore a low possibility that management information etc. shown in Fig. 21 may be maliciously altered, and/or a recording medium adapted to copy control (such as a recording medium certified based on format), copy control (including copy generation management) can be performed on the recording medium (secure recording medium) in the same manner as the recording medium 155 built in the recording and reproducing device 1100.

In the case where, for example, a piece of digital data which is broadcasted to be Copy-one-generation, changed to No-more-copies and recorded on the recording medium 155 is moved to a secure recording medium (recording medium 1102), the copy generation management information is recorded as No-more-copies as it is and the copiable number information (the number-of-allowed-copies information) is not changed but recorded as a positive number as it is by the recording and reproducing control portion 154. By use of this configuration and control, user friendliness close to an internal recording medium can be provided while protection of the piece of digital data recorded on the removable recording medium 1102 is attempted.

In the case where, for example, a piece of digital data recorded on the recording medium 155 is copied to a secure recording medium (recording medium 1102), the copy generation management information is recorded as No-more-copies as it is and the copiable number information (the number-of-allowed-copies information) is recorded as 0 by the recording and reproducing control portion 154.

Incidentally, when copy to the secure recording medium is performed, the copiable number information may be reduced and recorded as a positive number not as 0. On the contrary, when move to the secure recording medium is performed, the copiable number information may be recorded as 0.

Both of a secure recording medium and a non-secure recording medium can be mounted into the slot 1101 in the recording and reproducing device 1100. In this case, for example, the control portion 161 identifies the mounted removable recording medium 1102 as a secure recording medium or a non-secure recording medium by checking whether or not there is a management region 1201 or whether or not authentication with a recording medium determined based on format etc. is made. Based on this identification, control of the generation management information and the copiable number information are performed correspondingly at the time of recording. Thus, copyright protection and user friendliness can be achieved compatibly in accordance with the recording medium even in the case where the user possesses both the secure recording medium and the non-secure recording medium.

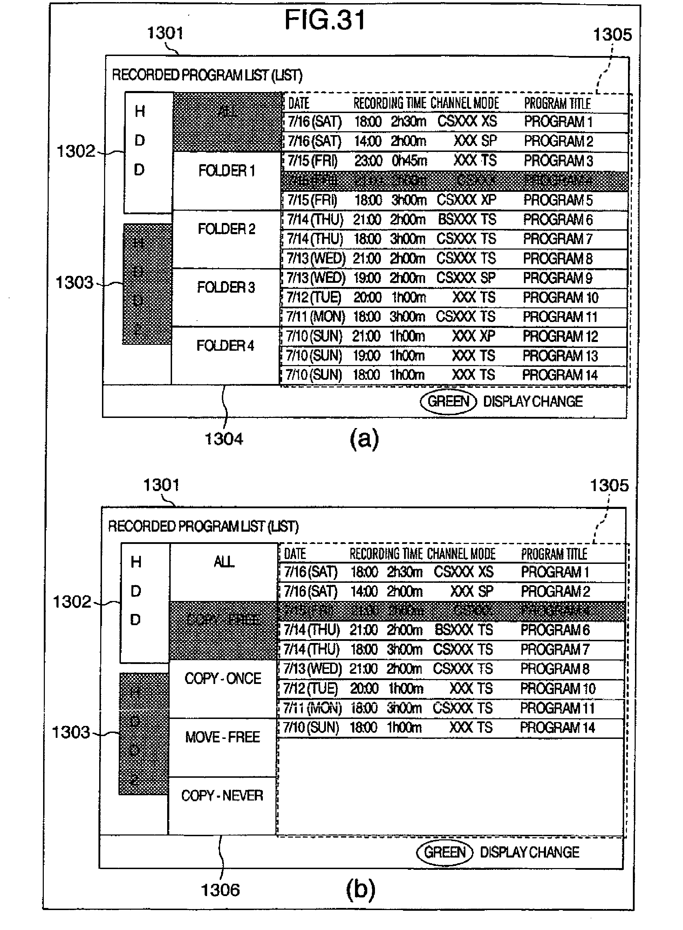

For example, Fig. 31 is an example of a screen for displaying a list of pieces of data recorded on the removable recording medium 1102 in the recording and reproducing device 1100. In Fig. 31(a), the reference numeral 1301 designates a display screen; 1302, a tab for selecting display of recorded data of a recording medium 155; and 1303, a tab for selecting display of recorded data of a removable recording medium 1102. A user exclusively changes over to the tab 1302 by a predetermined operation. The reference numeral 1304 designates display of a digital data category such as a folder name; and 1305, display of a data list corresponding to the designated category 1304, of the digital data recorded on the recording medium of the designated tab 1302 or 1303. When, for example, the user performs a predetermined operation to select "All" from the categories 1304, pieces of data recorded on the aforementioned recording medium are displayed in the list 1305 sequentially. When the user designates "Folder 1", only pieces of data classified in the folder by the user in advance are displayed. In Fig. 31(b), the reference numeral 1306 designates display of a category in accordance with copy generation management information, in place of display of the category 1304 in accordance with folder name. On this occasion, pieces of data corresponding to the designated category 1306 of copy generation management information are displayed in the list 1305. When, for example, the user performs a predetermined operation to select "Copy-free" from the categories 1306, only pieces of data in which the generation copy management information indicates copy-free are displayed in the list 1305. When the user selects "Copy-once" (or Copy-one-generation), only pieces of data in which the generation copy management information indicates Copy-one-generation are displayed in the list 1305. On this occasion, pieces of data in which the copy generation management information indicates No-more-copies and the copiable number for which is a positive number may be displayed in the category "Copy-once", and pieces of data in which the copy generation management information indicates Copy-one-generation and the copiable number for which is 0 may be displayed in the category "Copy-never". In addition, at the time of display, the copiable number information of each piece of data may be displayed together with data name.

When a user performs a predetermined operation on the remote controller or performs a predetermined operation on the operating portion 160, the control portion 161 changes the display between the display using the categories of the folder structure as shown in Fig. 31A and the display using the categories in accordance with the respective pieces of copy control information as shown in Fig. 31 (b).

The aforementioned processing permits display of pieces of digital data of a removable recording medium in the case where a plurality of pieces of copy control information are mixed. Thus, the pieces of digital data corresponding to the pieces of copy control information can be grasped easily so that user friendliness can be improved.

Incidentally, although a secure recording medium and a non-secure recording medium are not particularly discriminated in Fig. 31, they may be discriminated and displayed. For example, a tab of the secure recording medium or the non-secure recording medium may be provided as a tab in the same row as the tab 1302 or as an upper or lower tab than the tab 1302. Or the secure recording medium and the non-secure recording medium may be discriminated while associated with titles of pieces of digital data. In addition, folders, directories, and tabs may be displayed in accordance with each recording medium so that discrimination as to whether the recording medium is a secure recording medium or a non-secure recording medium can be indicated.

Display of the list 1305 may be thumbnail display referred to by the numeral 404 in Figs 22.

### <Receiver (4)>

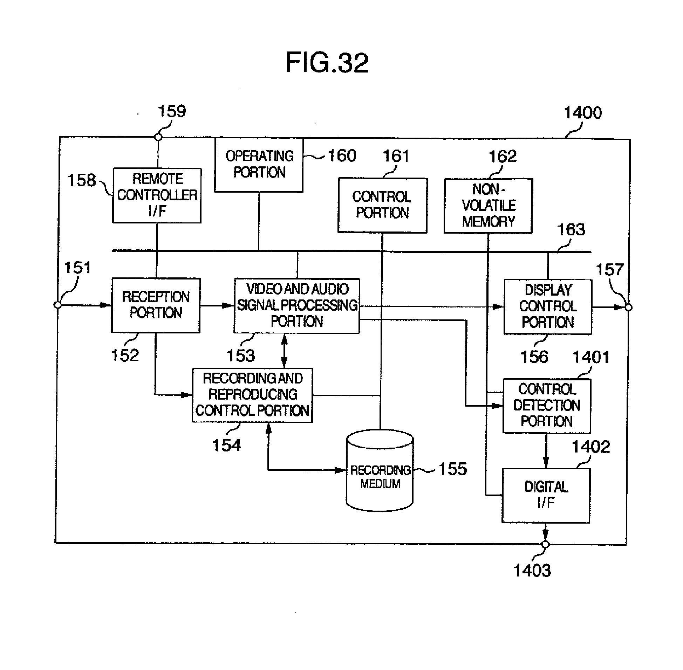

Fig. 32 is a block diagram showing an example of configuration of a recording and reproducing device 1400. The reference numeral 1402 designates a digital data interface by which a piece of digital data is encrypted and outputted; 1403, an output terminal connected, for example, to a different recording and reproducing device or a network; and 1401, a control detection portion which detects copy control information of the piece of digital data.

In the case where output is made from the interface 1402 and the output terminal 1403, control is made similarly to description about the case where a piece of digital data is copied or moved to a removable recording medium in Fig. 29.

For example, the case where a piece of digital data in which the copy generation management information indicates Copy-one-generation and which is recorded on the recording medium 155 is moved through the interface 1402 and the output terminal 1403 will be considered.

For example, in moving the piece of digital data to a secure recording medium, the status of the copy control information is outputted as Copy-one-generation and the copiable number is outputted as a positive number as it is. On the other hand, in moving the piece of digital data to a non-secure recording medium, the status of the copy control information is outputted as No-more-copies (or outputted as Copy-one-generation when the recording medium supports copy generation control) and the copiable number is outputted as 0.

In addition, in the configuration, a piece of digital data can be outputted from the output terminal 1403 and reproduced in streaming on an external display device or recording device. In that case, the control portion 161 controls the control detection portion 1401 to output the copy control information at the time of output as No-more-copies.

According to the aforementioned embodiment, different pieces of copy control information can be used and outputted in accordance with different output methods from the recording and reproducing device 1400 so that copyright protection can be applied flexibly.

Additional features of the invention are discussed in the following clauses:
1. A control method in a receiver (3) which receives digital contents and copy control information of the digital contents, comprising the steps of:
   when the received copy control information has copy generation information indicating Copy-One-Generation (SA01),
   recording the digital contents on a recording medium while setting the digital contents in a copy-prohibited state (SD04) in the case where the recording medium does not support copy number limitation management (SD02);
   recording the digital contents in a recording medium while setting the digital contents in a copy-prohibited state (SD04) when the received copy control information indicates prohibition of a plurality of copies (SD03) in the case where the recording medium supports copy number limitation management (SD02); and
   recording the digital contents in a recording medium while setting the digital contents in a copiable state up to a predetermined copiable number (SD05) when the received copy control information indicates permission of a plurality of copies (SD03) in the case where the recording medium supports copy number limitation management (SD02).
2. A control method according to Clause 1, further comprising the step of:
   updating the copiable number of the digital
   contents in the recording medium supporting copy number limitation management to N-1, while deleting the digital contents copied to another recording medium (SB03) in the case where a copy process has been interrupted (SB02) before the copy process is completed (SB01) when the digital contents are copied from the recording medium supporting copy number limitation management to the other recording medium in the case where the received copy control information indicates N as the predetermined copiable number.
3. A control method according to clause 1, further comprising the step of:
   storing part of the digital contents which have been moved to another recording medium while storing the remaining part of the digital contents which have not been moved to the other recording medium, in the recording medium supporting copy number limitation management (SC03) in the case where a move process has been interrupted (SC02) before the move process is completed (SC01) when the digital contents are copied from the recording medium supporting copy number limitation management to the other recording medium in the case where the received copy control information indicates prohibition of copies or in the case where the received copy control information indicates permission of copies but the copiable number is 0.
4. A control method according to Clause 1, further comprising the steps of:
   deciding that the recording medium is a recording medium not supporting copy number limitation management when the recording medium is a removable recording medium (118); and
   deciding that the recording medium is a recording medium supporting copy number limitation management when the recording medium is an internal recording medium (113) which records digital contents while locally encrypting the digital contents.
5. A control method according to Clause 4, further comprising the step of:
   updating the copiable number of the digital contents in the internal recording medium to N-1, while deleting the digital contents which have been copied to another recording medium (SB03) in the case where a copy process has been interrupted (SB02) before the copy process is completed (SB01) when the digital contents are copied from the internal recording medium to the other recording medium in the case where the received copy control information indicates N as the predetermined copiable number.
6. A control method according to Clause 4, further comprising the step of:
   storing part of the digital contents which have been moved to another recording medium while storing the remaining part of the digital contents which have not been moved to the other recording medium in the internal recording medium (SC03) in the case where a move process has been interrupted (SC02) before the move process is completed (SC01) when the digital contents are copied from the internal recording medium to the other recording medium in the case where the received copy control information indicates prohibition of copies or in the case where the received copy control information indicates permission of copies but the copiable number is 0.
7. A control method in a receiver (3) which receives digital contents and a plurality of kinds of copy control information for controlling copy of the digital contents and records the digital contents on one of recording media (113, 118, 121 and 122) in accordance with the kinds of copy control information, comprising the steps of:
   when first information in the received copy control information is copy generation information indicating Copy-One-Generation,
   enabling recording of the digital contents while setting the digital contents in a copiable state up to a plurality of copies in the case where second information in the received copy control information indicates Copy-A-Limited-Number for permitting the plurality of copies; and
   enabling recording of the digital contents only once while setting the digital contents in a copy-prohibited state in the case where second information in the received copy control information does not indicate Copy-A-Limited-Number.
8. A control method according to Clause 7, further comprising the step of:
   when the recording media are present,
   managing the sum of copiable numbers of contents recorded respectively on the recording media based on an allowed number of copies in the case where the first information is copy generation information indicating Copy-One-Generation and the second information indicates Copy-A-Limited-Number for allowing the plurality of copies.
9. A control method according to Clause 8, further comprising the step of:
   when the recording media are present,
   enabling recording of digital contents while setting the digital contents in a copy-prohibited state after the recording in the case where the second information does not indicate Copy-A-Limited-Number.
10. A control method according to Clause 7, further comprising the step of:
   recording digital contents while setting the digital contents in a copy-prohibited state after the recording when the digital contents are recorded onto a removable recording medium even in the case where the second information indicates Copy-A-Limited-Number for allowing the predetermined number of copies.
11. A reproducing device comprising:
   a reproducing portion which reproduces digital information containing copy control information from a first recording medium;
   a connection portion which is connected to a recording device which records digital information on a second recording medium different from the first recording medium; and
   a control portion which performs control so that when pieces of digital information different in control copy information but consistent in identification information are stored in the first recording medium and the second recording medium respectively and a piece of digital data reproduced from the first recording medium by the reproducing portion is recorded on the second recording medium through the connection portion, notice of the presence of digital information consistent in identification information in the second recording medium is given to a user.
12. A recording device comprising:
   a recording portion which records, on a recording medium, digital information containing copy control information containing copy generation management information and copiable number information;
      and
   a control portion which performs control so that when the copy generation management information is information indicating Copy-One-Generation, the copiable number information is recorded together with the digital information on the recording medium, and that when a list of the digital information recorded on the recording medium is displayed, the digital information is classified and displayed in accordance with the copy control information.
13. A recording device comprising:
   a recording portion which records digital information containing copy control information on a recording medium; and
   a control portion which decides deletion priority based on difference in copy control information when the digital information in the recording medium is deleted by the recording portion.
14. A recording and reproducing device (1100) comprising:
   a reception portion (152) which receives digital information containing copy control information containing copy generation management information and copiable number information;
   a mounting portion (1101) in which a plurality of removable recording media (1102) can be mounted;
   a recording and reproducing portion (154) which records/reproduces digital data on/from a recording medium mounted in the mounting portion in compliance with a predetermined rule;
   a copy control information processing portion which updates the copy control information; and
   a control portion (161) which controls the copy control information processing portion to update not the copy generation management information but the copiable number information in accordance with the digital data and performs control to move the digital data when the data are moved from a first recording medium to a second recording medium which is removable but different from the first recording medium.
15. A recording and reproducing device according to Clause 14, wherein
   the control portion judges whether or not the removable recording medium is a recording medium which can be copy-controlled by a predetermined management method, and the control portion controls the recording and reproducing portion to record the digital data on the removable recording medium without changing the copy generation management information and the copiable number information when the judgment results in that the removable recording medium can be copy-controlled.

## Claims

1. A recording apparatus comprising a receiving means (152) which receives digital content and copy control information for controlling copying of the digital content, a recording means (154) which records the digital content received by the receiving means into a plurality of recording media, and a control means (161) which controls the receiving means (152) and recording means (154), being **characterized by** that the control means controls:
if the copy control information received by the receiving means indicates that a predetermined number of copies is permitted, in case of recording said digital content received by the receiving means into a plurality of recording media, the copying of said digital content such that a sum of number of copies of said digital content does not exceed said predetermined number of copies.

2. The copy control method as claimed in Claim 1, wherein said plurality of recording media comprise an internal recording medium (113) and a removable recording medium (118),

3. The copy control method as claimed in Claim 1, even if the copy control information indicates a permission of a predetermined number of copies of the digital content, in case that said digital content received by the receiving means is recorded into a removable recording media, said digital content is recorded in a state that no more copy is permitted from the removable recording medium to any of other recording media.

4. A recording method for receiving digital content and copy control information for controlling copying of the digital content and recording the received digital content into a plurality of recording media, being **characterized by** that the method comprises:
if the received copy control information indicates that a predetermined number of copies is permitted, recording the received digital content into a plurality of recording media in such manner that a sum of number of copies of said digital content does not exceed said predetermined number of copies.

5. The copy control method as claimed in Claim 4, wherein said plurality of recording media comprise an internal recording medium (113) and a removable recording medium (118).

6. The copy control method as claimed in Claim 4, even if the copy control information indicates a permission of a predetermined number of copies of the digital content, in case that the received digital content is recorded into a removable recording media, recording said digital in such manner that no more copy is permitted from the removable recording medium to any of other recording media.
